# EUROPEAN PATENT APPLICATION

(11) **EP 4 518 230 A1**
(43) Date of publication of application: **05.03.2025**
(21) Application number: 23802654.6
(22) Date of filing: 25.04.2023
(51) Int. Cl.: H04L 5/00

(54) **COMMUNICATION METHOD AND RELATED APPARATUS**

(30) Priority: 12.05.2022 CN 202210514838
(71) Applicant: Huawei Technologies Co., Ltd., Shenzhen, Guangdong 518129 (CN)
(72) Inventor: LUO, Hejia, Shenzhen, Guangdong 518129 (CN); WANG, Xiaolu, Shenzhen, Guangdong 518129 (CN); YU, Tianhang, Shenzhen, Guangdong 518129 (CN); WANG, Jun, Shenzhen, Guangdong 518129 (CN); LI, Rong, Shenzhen, Guangdong 518129 (CN)
(74) Representative: Gill Jennings & Every LLP
(86) International application number: PCT/CN2023/090708
(87) International publication number: WO 2023/216880

(57) **Abstract**

This application discloses a communication method and a related apparatus, and relates to the field of communication technologies. The method includes: A terminal device obtains N sending configurations. Any one of the N sending configurations is used to generate a sounding signal to be sent to any one of M non-terrestrial devices, N sounding signals generated based on the N sending configurations are orthogonal, an overlapping region exists between M cells corresponding to the M non-terrestrial devices, N is an integer greater than or equal to 2, and M is an integer greater than or equal to N. The terminal device obtains first information. The first information includes information about switching between the M non-terrestrial devices in the overlapping region, and the first information is used to determine to separately send the N correspondingly generated sounding signals by using the N sending configurations. This method can resolve a problem that satellites in a coverage overlapping boundary region cannot effectively obtain signal strength of a sounding signal sent by a terminal device.

## Description

This application claims priority to Chinese Patent Application No. 202210514838.7, filed with the China National Intellectual Property Administration on May 12, 2022 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

Generally, in communication, a base station determines, by measuring signal received power of a sounding signal sent by a terminal device at each transmission reception point, whether the terminal device needs to switch between transmission reception points. When signal received power, corresponding to a candidate transmission reception point, of a sounding signal exceeds signal received power, corresponding to a current serving transmission reception point, of a sounding signal to a specific extent, the base station indicates the terminal device to switch to the candidate transmission reception point for communication.

In cellular communication, when the terminal device is located in an overlapping boundary region covered by two transmission reception points, the terminal device continuously sends a sounding signal by using a same sending configuration, so that different transmission reception points measure signal strength corresponding to the sounding signal, to indicate the terminal device to select a proper transmission reception point for communication.

However, in satellite communication, if the terminal device continuously sends a sounding signal based on a same sending configuration in a manner similar to that in cellular communication, satellites in a coverage overlapping boundary region cannot effectively obtain signal strength of the sounding signal sent by the terminal device.

### SUMMARY

Embodiments of this application provide a communication method and a related apparatus, to resolve a problem that satellites in a coverage overlapping boundary region cannot effectively obtain signal strength of a sounding signal sent by a terminal device.

According to a first aspect, an embodiment of this application provides a communication method. The method includes:

A terminal device obtains N sending configurations. Any one of the N sending configurations is used to generate a sounding signal to be sent to any one of M non-terrestrial devices, N sounding signals generated based on the N sending configurations are orthogonal, an overlapping region exists between M cells corresponding to the M non-terrestrial devices, N is an integer greater than or equal to 2, and M is an integer greater than or equal to N.

The terminal device obtains first information. The first information includes information about switching between the M non-terrestrial devices in the overlapping region, and the first information is used to determine to separately send the N correspondingly generated sounding signals by using the N sending configurations.

In this embodiment of this application, a communication method is provided. A terminal device obtains N sending configurations and first information. Each of the N sending configurations may be used to generate a sounding signal to be sent to one of M non-terrestrial devices. N sounding signals generated based on the N sending configurations are orthogonal. The N sounding signals may be completely orthogonal, or may be not completely orthogonal, that is, partial interference is allowed. Each of the generated sounding signals may be a signal that meets uplink energy detection, such as a sounding reference signal SRS or a preamble signal (preamble). That is, a receiver may obtain, by using the sounding signal, energy strength of sending by a transmitter. The first information includes information about switching between the M non-terrestrial devices in an overlapping region existing between M cells corresponding to the M non-terrestrial devices, and may be used to determine to separately send the N correspondingly generated sounding signals by using the N sending configurations. The non-terrestrial devices include satellites, uncrewed aerial vehicles, or the like. The overlapping region existing between the M cells may be a partial region in which at least two cells overlap, or may be a partial region in which all the M cells overlap. According to this embodiment of this application, a plurality of sending configurations and first information of the plurality of sending configurations may be obtained, and it may be determined, based on the first information, to separately send, by using the sending configurations, sounding signals correspondingly generated based on the sending configurations. Because the sounding signals are orthogonal, each non-terrestrial device may obtain a valid sounding signal. In this way, a problem that a sounding signal cannot be continuously sent based on a same sending configuration as the sounding signal sent by the terminal device reaches the non-terrestrial devices at quite different times and frequencies can be resolved, and each non-terrestrial device in a coverage overlapping boundary region can effectively obtain signal strength of a sounding signal sent by the terminal device.

In a possible implementation, the N sending configurations include a first sending configuration and a second sending configuration, the M non-terrestrial devices include a first non-terrestrial device and a second non-terrestrial device, the first sending configuration is used to generate a first sounding signal to be sent to the first non-terrestrial device, the second sending configuration is used to generate a second sounding signal to be sent to the second non-terrestrial device, the first sounding signal and the second sounding signal are orthogonal, a first region exists between a first cell corresponding to the first non-terrestrial device and a second cell corresponding to the second non-terrestrial device, and the first region is an overlapping region between the first cell and the second cell.

The first information includes information about switching between the first non-terrestrial device and the second non-terrestrial device in the first region, and the first information is used to determine to send the first sounding signal by using the first sending configuration and send the second sounding signal by using the second sending configuration.

In this embodiment of this application, a possible specific implementation of the sending configurations and the first information is provided. Specifically, the terminal device obtains the first sending configuration, the second sending configuration, and the first information. The first sending configuration may be used to generate the first sounding signal, and is used to send the first sounding signal to the first non-terrestrial device. The second sending configuration may be used to generate the second sounding signal, and is used to send the second sounding signal to the second non-terrestrial device. The first sounding signal and the second sounding signal are orthogonal, and the two sounding signals may be completely orthogonal, or may be not completely orthogonal, that is, partial interference is allowed. Each of the generated first sounding signal and second sounding signal may be a signal that meets uplink energy detection, such as an SRS or a preamble signal (preamble). That is, a receiver may obtain, by using the sounding signal, energy strength of sending by a transmitter. The first information includes information about switching between the first non-terrestrial device and the second non-terrestrial device in the first region in which the first cell and the second cell that correspond to the first non-terrestrial device and the second non-terrestrial device overlap, and may be used to determine to send the first sounding signal by using the first sending configuration and send the second sounding signal by using the second sending configuration. The first non-terrestrial device and the second non-terrestrial device may be satellites, uncrewed aerial vehicles, or the like. According to this embodiment of this application, a plurality of sending configurations and first information of the plurality of sending configurations may be obtained, and it may be determined, based on the first information, to send, by using the first sending configuration, the first sounding signal correspondingly generated based on the first sending configuration, and send, by using the second sending configuration, the second sounding signal correspondingly generated based on the second sending configuration. Because the first sounding signal and the second sounding signal are orthogonal, the first non-terrestrial device and the second non-terrestrial device may each obtain a valid sounding signal. In this way, a problem that a sounding signal cannot be continuously sent based on a same sending configuration as the sounding signal sent by the terminal device reaches the non-terrestrial devices at quite different times and frequencies can be resolved, and each non-terrestrial device in a coverage overlapping boundary region can effectively obtain signal strength of a sounding signal sent by the terminal device.

In a possible implementation, the first information indicates at least one of the following information: location information of the first region and time information corresponding to the first region.

In this embodiment of this application, a possible specific implementation of the first information is provided. Specifically, the first information indicates one or more of the location information of the first region and the time information corresponding to the first region. The first information may include one or more of the location information of the first region and the time information corresponding to the first region. Alternatively, the first information may not include the location information of the first region or the time information corresponding to the first region, but the location information of the first region and the time information corresponding to the first region may be obtained based on information included in the first information. The time information corresponding to the first region may be information about a moment or information about a time period. According to this embodiment of this application, the information about switching between the first non-terrestrial device and the second non-terrestrial device in the first region may be determined based on the location information of the first region and the time information corresponding to the first region that are indicated by the first information, and then it is determined to send, by using the first sending configuration, the first sounding signal correspondingly generated based on the first sending configuration, and send, by using the second sending configuration, the second sounding signal correspondingly generated based on the second sending configuration, so that each non-terrestrial device in a coverage overlapping boundary region can effectively obtain signal strength of a sounding signal sent by the terminal device.

In a possible implementation, that the first information is used to determine to send the first sounding signal by using the first sending configuration includes:
determining location information of a second region based on the location information of the first region and the time information corresponding to the first region, where the second region is a region in which the first cell and the second cell overlap at a current time; and
when the terminal device is located in the second region, determining to send the first sounding signal by using the first sending configuration.

In this embodiment of this application, a possible specific implementation of determining to send the first sounding signal by using the first sending configuration is provided. Specifically, in a scenario of an earth-moving beam and a handheld terminal device, a coverage region of a non-terrestrial device moves with movement of the non-terrestrial device, a signal transmitted by the terminal device is not clearly directional, and may be received by a plurality of non-terrestrial devices, and location information of a region in which the first cell and the second cell overlap changes over time. Therefore, a region, denoted as a second region, in which the first cell and the second cell overlap at a current time is determined based on the location information of the first region and the time information corresponding to the first region, and location information of the second region is obtained. When the terminal device is located in the second region, it indicates that cell switching may occur on a non-terrestrial device communicating with the terminal device in this case, and the terminal device is triggered to send, based on each sending configuration, a sounding signal correspondingly generated based on the sending configuration, that is, determine to send the first sounding signal by using the first sending configuration, and send the second sounding signal by using the second sending configuration. According to this embodiment of this application, in the scenario of an earth-moving beam and a handheld terminal device, it is determined, based on the location information of the first region and the time information corresponding to the first region, that the terminal device is located in the second region, and then the terminal device is triggered to send, based on each sending configuration, a sounding signal correspondingly generated based on the sending configuration. In this way, a problem that a sounding signal cannot be continuously sent based on a same sending configuration as the sounding signal sent by the terminal device reaches the non-terrestrial devices at quite different times and frequencies can be resolved, and each non-terrestrial device in a coverage overlapping boundary region can effectively obtain signal strength of a sounding signal sent by the terminal device.

In a possible implementation, the time information corresponding to the first region includes a first time corresponding to the first region, and the first region is a region in which the first cell and the second cell overlap at the first time.

The location information of the second region is determined based on the location information of the first region and a first location change amount, and the first location change amount is a location change amount of a region covered by the first non-terrestrial device from the first time to the current time.

In this embodiment of this application, a possible specific implementation of determining the location information of the second region is provided. Specifically, because the coverage region of the non-terrestrial device moves with movement of the non-terrestrial device, the location information of the region in which the first cell and the second cell overlap also changes over time. Therefore, a location change amount, denoted as a first location change amount, of a region covered in a time period from the first time to the current time may be obtained based on location information of the first non-terrestrial device or the second non-terrestrial device at the first time and location information at the current time. Then, the location information of the second region in which the first cell and the second cell overlap at the current time is determined by adding the first location change amount to the location information of the first region in which the first cell and the second cell overlap at the first time. According to this embodiment of this application, the location information of the second region of overlapping at the current time may be obtained by adding the location change amount of the first non-terrestrial device or the second non-terrestrial device between the two time points to the location information of the first region of overlapping at the first time, so that a location relationship between a location of the terminal device and the second region can be accurately determined, and then the terminal device is triggered to send, based on each sending configuration, a sounding signal correspondingly generated based on the sending configuration. In this way, each non-terrestrial device in a coverage overlapping boundary region can effectively obtain signal strength of a sounding signal sent by the terminal device.

In a possible implementation, the time information corresponding to the first region includes a second time corresponding to the first region, and the second time is a time within which switching occurs between the first non-terrestrial device and the second non-terrestrial device in the first region.

That the first information is used to determine to send the first sounding signal by using the first sending configuration includes:
when a current time is within the second time, determining to send the first sounding signal by using the first sending configuration.

In this embodiment of this application, a possible specific implementation of determining to send the first sounding signal by using the first sending configuration is provided. Specifically, in a scenario of a quasi-earth-fixed beam and a handheld terminal device, a coverage region of a non-terrestrial device is fixed relative to the ground. When the non-terrestrial device flies away from the coverage region, the original coverage region is taken over by another non-terrestrial device as a whole, the coverage region does not move with movement of the non-terrestrial device, a signal transmitted by the terminal device is not clearly directional, and may be received by a plurality of non-terrestrial devices, and location information of a region in which the first cell and the second cell overlap does not change over time. Therefore, a time, denoted as a second time, within which switching occurs between the first non-terrestrial device and the second non-terrestrial device in the first region is determined. The second time may be a time period. When a current time is within the second time, it indicates that cell switching may occur on a non-terrestrial device communicating with the terminal device in this case, and the terminal device is triggered to send, based on each sending configuration, a sounding signal correspondingly generated based on the sending configuration, that is, determine to send the first sounding signal by using the first sending configuration, and send the second sounding signal by using the second sending configuration. According to this embodiment of this application, in the scenario of a quasi-earth-fixed beam and a handheld terminal device, it is determined, based on the second time within which switching occurs between the first non-terrestrial device and the second non-terrestrial device in the first region, that a current time is within the second time, and then the terminal device is triggered to send, based on each sending configuration, a sounding signal correspondingly generated based on the sending configuration. In this way, a problem that a sounding signal cannot be continuously sent based on a same sending configuration as the sounding signal sent by the terminal device reaches the non-terrestrial devices at quite different times and frequencies can be resolved, and each non-terrestrial device in a coverage overlapping boundary region can effectively obtain signal strength of a sounding signal sent by the terminal device.

In a possible implementation, the first information further includes first identification information in the first region, the time information corresponding to the first region includes a third time corresponding to the first identification information, and the third time is a time within which switching occurs between the first non-terrestrial device and the second non-terrestrial device in a message coverage region.

That the first information is used to determine to send the first sounding signal by using the first sending configuration includes:
determining the third time based on the first identification information; and
when a current time is within the third time, determining to send the first sounding signal by using the first sending configuration.

In this embodiment of this application, a possible specific implementation of determining to send the first sounding signal by using the first sending configuration is provided. Specifically, in a scenario of a progressive quasi-earth-fixed beam and a handheld terminal device, a coverage region of each beam of a non-terrestrial device is fixed relative to the ground. When the non-terrestrial device flies away from a coverage region, a beam that is the farthest in the original coverage region first stops coverage, and is taken over by another non-terrestrial device, and then a beam that is the second farthest in the original coverage region stops coverage, and is taken over by another non-terrestrial device. The coverage region is taken over between different non-terrestrial devices in a progressive beam-by-beam manner. A signal transmitted by the terminal device is not clearly directional, and may be received by a plurality of non-terrestrial devices, and location information of a region in which the first cell and the second cell overlap does not change over time. Therefore, a third time corresponding to a beam is determined based on identification information of the beam. The third time is a time within which switching occurs between the first non-terrestrial device and the second non-terrestrial device in a message coverage region (that is, in the beam). The third time may be a time period. When a current time is within the third time, it indicates that cell (beam) switching may occur on a non-terrestrial device communicating with the terminal device in this case, and the terminal device is triggered to send, based on each sending configuration, a sounding signal correspondingly generated based on the sending configuration, that is, determine to send the first sounding signal by using the first sending configuration, and send the second sounding signal by using the second sending configuration. According to this embodiment of this application, in the scenario of a progressive quasi-earth-fixed beam and a handheld terminal device, it is determined, based on the third time within which switching occurs between the first non-terrestrial device and the second non-terrestrial device in the beam, that a current time is within the third time, and then the terminal device is triggered to send, based on each sending configuration, a sounding signal correspondingly generated based on the sending configuration. In this way, a problem that a sounding signal cannot be continuously sent based on a same sending configuration as the sounding signal sent by the terminal device reaches the non-terrestrial devices at quite different times and frequencies can be resolved, and each non-terrestrial device in a coverage overlapping boundary region can effectively obtain signal strength of a sounding signal sent by the terminal device.

In a possible implementation, the sending the first sounding signal by using the first sending configuration includes:
determining a first sending carrier and a first sending time based on the first sending configuration; and
sending the first sounding signal to a first network device based on the first sending carrier and the first sending time, where the first network device is a network device corresponding to the first cell.

In this embodiment of this application, a possible specific implementation of sending the first sounding signal by using the first sending configuration is provided. Specifically, the first sending carrier and the first sending time may be determined based on the first sending configuration, and the first sounding signal is sent to the first network device by using the first sending carrier and the first sending time. Similarly, a second sending carrier and a second sending time may be determined based on the second sending configuration, and the second sounding signal is sent to a second network device by using the second sending carrier and the second sending time. According to this embodiment of this application, the first sounding signal and the second sounding signal can be orthogonal, and the first non-terrestrial device and the second non-terrestrial device can obtain valid sounding signals.

In a possible implementation, the first sending configuration includes time-frequency compensation information corresponding to the first non-terrestrial device and movement trajectory information of the first non-terrestrial device.

The first sending carrier is determined based on the time-frequency compensation information corresponding to the first non-terrestrial device, and the first sending time is determined based on the movement trajectory information of the first non-terrestrial device.

In this embodiment of this application, a possible specific implementation of determining the first sending carrier and the first sending time is provided. Specifically, the first sending carrier is determined based on the time-frequency compensation information corresponding to the first non-terrestrial device, and the first sending time is determined based on the movement trajectory information of the first non-terrestrial device. Similarly, the second sending carrier is determined based on time-frequency compensation information of the second non-terrestrial device, and the second sending time is determined based on movement trajectory information of the second non-terrestrial device. According to this embodiment of this application, sending frequencies and sending times of the sounding signals are determined, so that the sounding signals are isolated from each other and do not interfere with each other, and each non-terrestrial device in a coverage overlapping boundary region can effectively obtain signal strength of a sounding signal sent by the terminal device.

In a possible implementation, the first sending configuration further includes first direction information, and the first direction information includes information about a sending direction of a message that carries the first sounding signal.

The sending the first sounding signal to a first network device includes:
sending the first sounding signal to the first network device based on the first direction information.

In this embodiment of this application, a possible specific implementation of sending the first sounding signal by using the first sending configuration is provided. Specifically, in a scenario of a directional terminal device, a signal transmitted by the terminal device is clearly directional, and a sounding signal sent by using one beam can be received by only one specific non-terrestrial device. Therefore, the first sending configuration further includes the first direction information. When a sounding signal sending mechanism is triggered, the terminal device sends the first sounding signal to the first network device in a direction indicated by the first direction information. According to this embodiment of this application, sending direction information of the sounding signal is configured in the first sending configuration, so that the sounding signal sent based on the first sending configuration can be clearly directional, and can be received by only one non-terrestrial device in a specific direction. In this way, an uplink time-frequency synchronization problem and a directivity problem of non-terrestrial devices associated with a plurality of sending configurations in the scenario of a directional terminal device can be resolved, and each non-terrestrial device in a coverage overlapping boundary region can effectively obtain signal strength of a sounding signal sent by the terminal device.

According to a second aspect, an embodiment of this application provides a communication method. The method includes:

A first network device sends N sending configurations to a terminal device. Any one of the N sending configurations is used to generate a sounding signal to be sent to any one of M non-terrestrial devices, N sounding signals generated based on the N sending configurations are orthogonal, an overlapping region exists between M cells corresponding to the M non-terrestrial devices, N is an integer greater than or equal to 2, and M is an integer greater than or equal to N.

The first network device sends first information to the terminal device. The first information includes information about switching between the M non-terrestrial devices in the overlapping region, and the first information is used to determine to separately send the N correspondingly generated sounding signals by using the N sending configurations.

In an embodiment of this application, a communication method is provided. A first network device sends N sending configurations and first information to a terminal device. Each of the N sending configurations may be used to generate a sounding signal to be sent to one of M non-terrestrial devices. N sounding signals generated based on the N sending configurations are orthogonal. The N sounding signals may be completely orthogonal, or may be not completely orthogonal, that is, partial interference is allowed. Each of the generated sounding signals may be a signal that meets uplink energy detection, such as a sounding reference signal SRS or a preamble signal (preamble). That is, a receiver may obtain, by using the sounding signal, energy strength of sending by a transmitter. The first information includes information about switching between the M non-terrestrial devices in an overlapping region existing between M cells corresponding to the M non-terrestrial devices, and may be used to determine to separately send the N correspondingly generated sounding signals by using the N sending configurations. The non-terrestrial devices include satellites, uncrewed aerial vehicles, or the like. The overlapping region existing between the M cells may be a partial region in which at least two cells overlap, or may be a partial region in which all the M cells overlap. The first network device is a network device corresponding to one of the M cells. According to this embodiment of this application, the terminal device may obtain a plurality of sending configurations and first information of the plurality of sending configurations, and determine, based on the first information, to separately send, by using the sending configurations, sounding signals correspondingly generated based on the sending configurations. Because the sounding signals are orthogonal, each non-terrestrial device may obtain a valid sounding signal. In this way, a problem that a sounding signal cannot be continuously sent based on a same sending configuration as the sounding signal sent by the terminal device reaches the non-terrestrial devices at quite different times and frequencies can be resolved, and each non-terrestrial device in a coverage overlapping boundary region can effectively obtain signal strength of a sounding signal sent by the terminal device.

In a possible implementation, the N sending configurations include a first sending configuration and a second sending configuration, the M non-terrestrial devices include a first non-terrestrial device and a second non-terrestrial device, the first sending configuration is used to generate a first sounding signal to be sent to the first non-terrestrial device, the second sending configuration is used to generate a second sounding signal to be sent to the second non-terrestrial device, the first sounding signal and the second sounding signal are orthogonal, a first region exists between a first cell corresponding to the first non-terrestrial device and a second cell corresponding to the second non-terrestrial device, and the first region is an overlapping region between the first cell and the second cell.

The first information includes information about switching between the first non-terrestrial device and the second non-terrestrial device in the first region, and the first information is used to determine to send the first sounding signal by using the first sending configuration and send the second sounding signal by using the second sending configuration.

In this embodiment of this application, a possible specific implementation of the sending configurations and the first information is provided. Specifically, the first network device sends the first sending configuration, the second sending configuration, and the first information to the terminal device. The first sending configuration may be used to generate the first sounding signal, and is used to send the first sounding signal to the first non-terrestrial device. The second sending configuration may be used to generate the second sounding signal, and is used to send the second sounding signal to the second non-terrestrial device. The first sounding signal and the second sounding signal are orthogonal, and the two sounding signals may be completely orthogonal, or may be not completely orthogonal, that is, partial interference is allowed. Each of the generated first sounding signal and second sounding signal may be a signal that meets uplink energy detection, such as an SRS or a preamble signal (preamble). That is, a receiver may obtain, by using the sounding signal, energy strength of sending by a transmitter. The first information includes information about switching between the first non-terrestrial device and the second non-terrestrial device in the first region in which the first cell and the second cell that correspond to the first non-terrestrial device and the second non-terrestrial device overlap, and may be used to determine to send the first sounding signal by using the first sending configuration and send the second sounding signal by using the second sending configuration. The first non-terrestrial device and the second non-terrestrial device may be satellites, uncrewed aerial vehicles, or the like. The first network device is a network device corresponding to the first cell. According to this embodiment of this application, a plurality of sending configurations and first information of the plurality of sending configurations may be obtained, and it may be determined, based on the first information, to send, by using the first sending configuration, the first sounding signal correspondingly generated based on the first sending configuration, and send, by using the second sending configuration, the second sounding signal correspondingly generated based on the second sending configuration. Because the first sounding signal and the second sounding signal are orthogonal, the first non-terrestrial device and the second non-terrestrial device may each obtain a valid sounding signal. In this way, a problem that a sounding signal cannot be continuously sent based on a same sending configuration as the sounding signal sent by the terminal device reaches the non-terrestrial devices at quite different times and frequencies can be resolved, and each non-terrestrial device in a coverage overlapping boundary region can effectively obtain signal strength of a sounding signal sent by the terminal device.

In a possible implementation, the first information indicates at least one of the following information: location information of the first region and time information corresponding to the first region.

In this embodiment of this application, a possible specific implementation of the first information is provided. Specifically, the first information indicates one or more of the location information of the first region and the time information corresponding to the first region. The first information may include one or more of the location information of the first region and the time information corresponding to the first region. Alternatively, the first information may not include the location information of the first region or the time information corresponding to the first region, but the location information of the first region and the time information corresponding to the first region may be obtained based on information included in the first information. The time information corresponding to the first region may be information about a moment or information about a time period. According to this embodiment of this application, the information about switching between the first non-terrestrial device and the second non-terrestrial device in the first region may be determined based on the location information of the first region and the time information corresponding to the first region that are indicated by the first information, and then it is determined to send, by using the first sending configuration, the first sounding signal correspondingly generated based on the first sending configuration, and send, by using the second sending configuration, the second sounding signal correspondingly generated based on the second sending configuration, so that each non-terrestrial device in a coverage overlapping boundary region can effectively obtain signal strength of a sounding signal sent by the terminal device.

In a possible implementation, that the first information is used to determine to send the first sounding signal by using the first sending configuration includes:

The first information is used to: when the terminal device is located in a second region, determine to send the first sounding signal by using the first sending configuration. Location information of the second region is determined based on the location information of the first region and the time information corresponding to the first region, and the second region is a region in which the first cell and the second cell overlap at a current time.

In this embodiment of this application, a possible specific implementation of determining to send the first sounding signal by using the first sending configuration is provided. Specifically, in a scenario of an earth-moving beam and a handheld terminal device, a coverage region of a non-terrestrial device moves with movement of the non-terrestrial device, a signal transmitted by the terminal device is not clearly directional, and may be received by a plurality of non-terrestrial devices, and location information of a region in which the first cell and the second cell overlap changes over time. Therefore, a region, denoted as a second region, in which the first cell and the second cell overlap at a current time is determined based on the location information of the first region and the time information corresponding to the first region, and location information of the second region is obtained. When the terminal device is located in the second region, it indicates that cell switching may occur on a non-terrestrial device communicating with the terminal device in this case, and the terminal device is triggered to send, based on each sending configuration, a sounding signal correspondingly generated based on the sending configuration, that is, determine to send the first sounding signal by using the first sending configuration. Correspondingly, the first network device receives the first sounding signal that is sent by the terminal device by using the first sending configuration. The first network device is a network device corresponding to the first cell. Similarly, the second sounding signal is sent by using the second sending configuration. Correspondingly, the first network device receives the second sounding signal that is sent by the terminal device by using the second sending configuration. The second network device is a network device corresponding to the second cell. According to this embodiment of this application, in the scenario of an earth-moving beam and a handheld terminal device, it is determined, based on the location information of the first region and the time information corresponding to the first region, that the terminal device is located in the second region, and then the terminal device is triggered to send, based on each sending configuration, a sounding signal correspondingly generated based on the sending configuration. In this way, a problem that a sounding signal cannot be continuously sent based on a same sending configuration as the sounding signal sent by the terminal device reaches the non-terrestrial devices at quite different times and frequencies can be resolved, and each non-terrestrial device in a coverage overlapping boundary region can effectively obtain signal strength of a sounding signal sent by the terminal device.

In a possible implementation, the time information corresponding to the first region includes a first time corresponding to the first region, and the first region is a region in which the first cell and the second cell overlap at the first time.

The location information of the second region is determined based on the location information of the first region and a first location change amount, and the first location change amount is a location change amount of a region covered by the first non-terrestrial device from the first time to the current time.

In this embodiment of this application, a possible specific implementation of determining the location information of the second region is provided. Specifically, because the coverage region of the non-terrestrial device moves with movement of the non-terrestrial device, the location information of the region in which the first cell and the second cell overlap also changes over time. Therefore, a location change amount, denoted as a first location change amount, of a region covered in a time period from the first time to the current time may be obtained based on location information of the first non-terrestrial device or the second non-terrestrial device at the first time and location information at the current time. Then, the location information of the second region in which the first cell and the second cell overlap at the current time is determined by adding the first location change amount to the location information of the first region in which the first cell and the second cell overlap at the first time. According to this embodiment of this application, the location information of the second region of overlapping at the current time may be obtained by adding the location change amount of the first non-terrestrial device or the second non-terrestrial device between the two time points to the location information of the first region of overlapping at the first time, so that a location relationship between a location of the terminal device and the second region can be accurately determined, and then the terminal device is triggered to send, based on each sending configuration, a sounding signal correspondingly generated based on the sending configuration. In this way, each non-terrestrial device in a coverage overlapping boundary region can effectively obtain signal strength of a sounding signal sent by the terminal device.

In a possible implementation, the time information corresponding to the first region includes a second time corresponding to the first region, and the second time is a time within which switching occurs between the first non-terrestrial device and the second non-terrestrial device in the first region.

That the first information is used to determine to send the first sounding signal by using the first sending configuration includes:

The first information is used to: when a current time is within the second time, determine to send the first sounding signal by using the first sending configuration.

In this embodiment of this application, a possible specific implementation of determining to send the first sounding signal by using the first sending configuration is provided. Specifically, in a scenario of a quasi-earth-fixed beam and a handheld terminal device, a coverage region of a non-terrestrial device is fixed relative to the ground. When the non-terrestrial device flies away from the coverage region, the original coverage region is taken over by another non-terrestrial device as a whole, the coverage region does not move with movement of the non-terrestrial device, a signal transmitted by the terminal device is not clearly directional, and may be received by a plurality of non-terrestrial devices, and location information of a region in which the first cell and the second cell overlap does not change over time. Therefore, a time, denoted as a second time, within which switching occurs between the first non-terrestrial device and the second non-terrestrial device in the first region is determined. The second time may be a time period. When a current time is within the second time, it indicates that cell switching may occur on a non-terrestrial device communicating with the terminal device in this case, and the terminal device is triggered to send, based on each sending configuration, a sounding signal correspondingly generated based on the sending configuration, that is, determine to send the first sounding signal by using the first sending configuration. Correspondingly, the first network device receives the first sounding signal that is sent by the terminal device by using the first sending configuration. The first network device is a network device corresponding to the first cell. Similarly, the second sounding signal is sent by using the second sending configuration. Correspondingly, a second network device receives the second sounding signal that is sent by the terminal device by using the second sending configuration. The second network device is a network device corresponding to the second cell. According to this embodiment of this application, in the scenario of a quasi-earth-fixed beam and a handheld terminal device, it is determined, based on the second time within which switching occurs between the first non-terrestrial device and the second non-terrestrial device in the first region, that a current time is within the second time, and then the terminal device is triggered to send, based on each sending configuration, a sounding signal correspondingly generated based on the sending configuration. In this way, a problem that a sounding signal cannot be continuously sent based on a same sending configuration as the sounding signal sent by the terminal device reaches the non-terrestrial devices at quite different times and frequencies can be resolved, and each non-terrestrial device in a coverage overlapping boundary region can effectively obtain signal strength of a sounding signal sent by the terminal device.

In a possible implementation, the first information further includes first identification information in the first region, the time information corresponding to the first region includes a third time corresponding to the first identification information, and the third time is a time within which switching occurs between the first non-terrestrial device and the second non-terrestrial device in a message coverage region.

That the first information is used to determine to send the first sounding signal by using the first sending configuration includes:

The first information is used to: when a current time is within the third time, determine to send the first sounding signal by using the first sending configuration. The third time is determined based on the first identification information.

In this embodiment of this application, a possible specific implementation of determining to send the first sounding signal by using the first sending configuration is provided. Specifically, in a scenario of a progressive quasi-earth-fixed beam and a handheld terminal device, a coverage region of each beam of a non-terrestrial device is fixed relative to the ground. When the non-terrestrial device flies away from a coverage region, a beam that is the farthest in the original coverage region first stops coverage, and is taken over by another non-terrestrial device, and then a beam that is the second farthest in the original coverage region stops coverage, and is taken over by another non-terrestrial device. The coverage region is taken over between different non-terrestrial devices in a progressive beam-by-beam manner. A signal transmitted by the terminal device is not clearly directional, and may be received by a plurality of non-terrestrial devices, and location information of a region in which the first cell and the second cell overlap does not change over time. Therefore, a third time corresponding to a beam is determined based on identification information of the beam. The third time is a time within which switching occurs between the first non-terrestrial device and the second non-terrestrial device in a message coverage region (that is, in the beam). The third time may be a time period. When a current time is within the third time, it indicates that cell (beam) switching may occur on a non-terrestrial device communicating with the terminal device in this case, and the terminal device is triggered to send, based on each sending configuration, a sounding signal correspondingly generated based on the sending configuration, that is, determine to send the first sounding signal by using the first sending configuration. Correspondingly, the first network device receives the first sounding signal that is sent by the terminal device by using the first sending configuration. The first network device is a network device corresponding to the first cell. Similarly, the second sounding signal is sent by using the second sending configuration. Correspondingly, a second network device receives the second sounding signal that is sent by the terminal device by using the second sending configuration. The second network device is a network device corresponding to the second cell. According to this embodiment of this application, in the scenario of a progressive quasi-earth-fixed beam and a handheld terminal device, it is determined, based on the third time within which switching occurs between the first non-terrestrial device and the second non-terrestrial device in the beam, that a current time is within the third time, and then the terminal device is triggered to send, based on each sending configuration, a sounding signal correspondingly generated based on the sending configuration. In this way, a problem that a sounding signal cannot be continuously sent based on a same sending configuration as the sounding signal sent by the terminal device reaches the non-terrestrial devices at quite different times and frequencies can be resolved, and each non-terrestrial device in a coverage overlapping boundary region can effectively obtain signal strength of a sounding signal sent by the terminal device.

In a possible implementation, the first sounding signal is sent based on a first sending carrier and a first sending time, and the first sending carrier and the first sending time are determined based on the first sending configuration.

In this embodiment of this application, a possible specific implementation of sending the first sounding signal by using the first sending configuration is provided. Specifically, the first sending carrier and the first sending time may be determined based on the first sending configuration, and the first sounding signal is sent to the first network device by using the first sending carrier and the first sending time. Correspondingly, the first network device receives the first sounding signal that is sent by the terminal device by using the first sending carrier and the first sending time. The first network device is a network device corresponding to the first cell. Similarly, a second sending carrier and a second sending time may be determined based on the second sending configuration, and the second sounding signal is sent to the second network device by using the second sending carrier and the second sending time. Correspondingly, the second network device receives the second sounding signal that is sent by the terminal device by using the second sending carrier and the second sending time. The second network device is a network device corresponding to the second cell. According to this embodiment of this application, the first sounding signal and the second sounding signal can be orthogonal, and the first non-terrestrial device and the second non-terrestrial device can obtain valid sounding signals.

In a possible implementation, the first sending configuration includes time-frequency compensation information corresponding to the first non-terrestrial device and movement trajectory information of the first non-terrestrial device.

The first sending carrier is determined based on the time-frequency compensation information corresponding to the first non-terrestrial device, and the first sending time is determined based on the movement trajectory information of the first non-terrestrial device.

In this embodiment of this application, a possible specific implementation of determining the first sending carrier and the first sending time is provided. Specifically, the first sending carrier is determined based on the time-frequency compensation information corresponding to the first non-terrestrial device, and the first sending time is determined based on the movement trajectory information of the first non-terrestrial device. Similarly, the second sending carrier is determined based on time-frequency compensation information of the second non-terrestrial device, and the second sending time is determined based on movement trajectory information of the second non-terrestrial device. According to this embodiment of this application, sending frequencies and sending times of the sounding signals are determined, so that the sounding signals are isolated from each other and do not interfere with each other, and each non-terrestrial device in a coverage overlapping boundary region can effectively obtain signal strength of a sounding signal sent by the terminal device.

In a possible implementation, the first sending configuration further includes first direction information, the first direction information includes information about a sending direction of a message that carries the first sounding signal, and the first sounding signal is sent based on the first direction information.

In this embodiment of this application, a possible specific implementation of sending the first sounding signal by using the first sending configuration is provided. Specifically, in a scenario of a directional terminal device, a signal transmitted by the terminal device is clearly directional, and a sounding signal sent by using one beam can be received by only one specific non-terrestrial device. Therefore, the first sending configuration further includes the first direction information. When a sounding signal sending mechanism is triggered, the terminal device sends the first sounding signal to the first network device in a direction indicated by the first direction information. Correspondingly, the first network device receives the first sounding signal from the direction indicated by the first direction information. According to this embodiment of this application, sending direction information of the sounding signal is configured in the first sending configuration, so that the sounding signal sent based on the first sending configuration can be clearly directional, and can be received by only one non-terrestrial device in a specific direction. In this way, an uplink time-frequency synchronization problem and a directivity problem of non-terrestrial devices associated with a plurality of sending configurations in the scenario of a directional terminal device can be resolved, and each non-terrestrial device in a coverage overlapping boundary region can effectively obtain signal strength of a sounding signal sent by the terminal device.

According to a third aspect, an embodiment of this application provides a communication apparatus. The apparatus includes a module or a unit configured to perform the method in the first aspect or the second aspect.

In a possible design, the communication apparatus includes:
a processing unit, configured to obtain N sending configurations by using a transceiver unit, where any one of the N sending configurations is used to generate a sounding signal to be sent to any one of M non-terrestrial devices, N sounding signals generated based on the N sending configurations are orthogonal, an overlapping region exists between M cells corresponding to the M non-terrestrial devices, N is an integer greater than or equal to 2, and M is an integer greater than or equal to N.

The processing unit is further configured to obtain first information by using the transceiver unit. The first information includes information about switching between the M non-terrestrial devices in the overlapping region, and the first information is used to determine to separately send the N correspondingly generated sounding signals by using the N sending configurations.

In a possible implementation, the N sending configurations include a first sending configuration and a second sending configuration, the M non-terrestrial devices include a first non-terrestrial device and a second non-terrestrial device, the first sending configuration is used to generate a first sounding signal to be sent to the first non-terrestrial device, the second sending configuration is used to generate a second sounding signal to be sent to the second non-terrestrial device, the first sounding signal and the second sounding signal are orthogonal, a first region exists between a first cell corresponding to the first non-terrestrial device and a second cell corresponding to the second non-terrestrial device, and the first region is an overlapping region between the first cell and the second cell.

The first information includes information about switching between the first non-terrestrial device and the second non-terrestrial device in the first region, and the first information is used to determine to send the first sounding signal by using the first sending configuration and send the second sounding signal by using the second sending configuration.

In a possible implementation, the first information indicates at least one of the following information: location information of the first region and time information corresponding to the first region.

In a possible implementation, the processing unit is further configured to determine location information of a second region based on the location information of the first region and the time information corresponding to the first region. The second region is a region in which the first cell and the second cell overlap at a current time.

The processing unit is further configured to: when the communication apparatus is located in the second region, determine to send the first sounding signal by using the first sending configuration.

**In** a possible implementation, the time information corresponding to the first region includes a first time corresponding to the first region, and the first region is a region in which the first cell and the second cell overlap at the first time.

The location information of the second region is determined based on the location information of the first region and a first location change amount, and the first location change amount is a location change amount of a region covered by the first non-terrestrial device from the first time to the current time.

**In** a possible implementation, the time information corresponding to the first region includes a second time corresponding to the first region, and the second time is a time within which switching occurs between the first non-terrestrial device and the second non-terrestrial device in the first region.

The processing unit is further configured to: when a current time is within the second time, determine to send the first sounding signal by using the first sending configuration.

**In** a possible implementation, the first information further includes first identification information in the first region, the time information corresponding to the first region includes a third time corresponding to the first identification information, and the third time is a time within which switching occurs between the first non-terrestrial device and the second non-terrestrial device in a message coverage region.

The processing unit is further configured to determine the third time based on the first identification information.

The processing unit is further configured to: when a current time is within the third time, determine to send the first sounding signal by using the first sending configuration.

**In** a possible implementation, the processing unit is further configured to determine a first sending carrier and a first sending time based on the first sending configuration.

The processing unit is further configured to send the first sounding signal to a first network device based on the first sending carrier and the first sending time by using the transceiver unit. The first network device is a network device corresponding to the first cell.

In a possible implementation, the first sending configuration includes time-frequency compensation information corresponding to the first non-terrestrial device and movement trajectory information of the first non-terrestrial device.

The first sending carrier is determined based on the time-frequency compensation information corresponding to the first non-terrestrial device, and the first sending time is determined based on the movement trajectory information of the first non-terrestrial device.

In a possible implementation, the first sending configuration further includes first direction information, and the first direction information includes information about a sending direction of a message that carries the first sounding signal.

The processing unit is further configured to send the first sounding signal to the first network device based on the first direction information by using the transceiver unit.

In another possible design, the communication apparatus includes:
a processing unit, configured to send N sending configurations to a terminal device by using a transceiver unit, where any one of the N sending configurations is used to generate a sounding signal to be sent to any one of M non-terrestrial devices, N sounding signals generated based on the N sending configurations are orthogonal, an overlapping region exists between M cells corresponding to the M non-terrestrial devices, N is an integer greater than or equal to 2, and M is an integer greater than or equal to N.

The processing unit is further configured to send first information to the terminal device by using the transceiver unit. The first information includes information about switching between the M non-terrestrial devices in the overlapping region, and the first information is used to determine to separately send the N correspondingly generated sounding signals by using the N sending configurations.

In a possible implementation, the N sending configurations include a first sending configuration and a second sending configuration, the M non-terrestrial devices include a first non-terrestrial device and a second non-terrestrial device, the first sending configuration is used to generate a first sounding signal to be sent to the first non-terrestrial device, the second sending configuration is used to generate a second sounding signal to be sent to the second non-terrestrial device, the first sounding signal and the second sounding signal are orthogonal, a first region exists between a first cell corresponding to the first non-terrestrial device and a second cell corresponding to the second non-terrestrial device, and the first region is an overlapping region between the first cell and the second cell.

The first information includes information about switching between the first non-terrestrial device and the second non-terrestrial device in the first region, and the first information is used to determine to send the first sounding signal by using the first sending configuration and send the second sounding signal by using the second sending configuration.

In a possible implementation, the first information indicates at least one of the following information: location information of the first region and time information corresponding to the first region.

In a possible implementation, the first information is used to: when the terminal device is located in a second region, determine to send the first sounding signal by using the first sending configuration. Location information of the second region is determined based on the location information of the first region and the time information corresponding to the first region, and the second region is a region in which the first cell and the second cell overlap at a current time.

In a possible implementation, the time information corresponding to the first region includes a first time corresponding to the first region, and the first region is a region in which the first cell and the second cell overlap at the first time.

The location information of the second region is determined based on the location information of the first region and a first location change amount, and the first location change amount is a location change amount of a region covered by the first non-terrestrial device from the first time to the current time.

In a possible implementation, the time information corresponding to the first region includes a second time corresponding to the first region, and the second time is a time within which switching occurs between the first non-terrestrial device and the second non-terrestrial device in the first region.

The first information is used to: when a current time is within the second time, determine to send the first sounding signal by using the first sending configuration.

In a possible implementation, the first information further includes first identification information in the first region, the time information corresponding to the first region includes a third time corresponding to the first identification information, and the third time is a time within which switching occurs between the first non-terrestrial device and the second non-terrestrial device in a message coverage region.

The first information is used to: when a current time is within the third time, determine to send the first sounding signal by using the first sending configuration. The third time is determined based on the first identification information.

In a possible implementation, the first sounding signal is sent based on a first sending carrier and a first sending time, and the first sending carrier and the first sending time are determined based on the first sending configuration.

In a possible implementation, the first sending configuration includes time-frequency compensation information corresponding to the first non-terrestrial device and movement trajectory information of the first non-terrestrial device.

The first sending carrier is determined based on the time-frequency compensation information corresponding to the first non-terrestrial device, and the first sending time is determined based on the movement trajectory information of the first non-terrestrial device.

In a possible implementation, the first sending configuration further includes first direction information, the first direction information includes information about a sending direction of a message that carries the first sounding signal, and the first sounding signal is sent based on the first direction information.

For technical effects brought by the third aspect or any possible implementation, refer to descriptions of the technical effects corresponding to the first aspect or the second aspect and corresponding implementations.

According to a fourth aspect, an embodiment of this application provides a communication apparatus, including a processor. The processor is coupled to a memory, and may be configured to execute instructions in the memory, to implement the method in the first aspect or the second aspect and any possible implementation. Optionally, the communication apparatus further includes the memory. Optionally, the communication apparatus further includes a communication interface, and the processor is coupled to the communication interface.

According to a fifth aspect, an embodiment of this application provides a communication apparatus, including a logic circuit and a communication interface. The communication interface is configured to receive information or send information. The logic circuit is configured to receive the information or send the information through the communication interface, so that the communication apparatus performs the method in the first aspect or the second aspect and any possible implementation.

According to a sixth aspect, an embodiment of this application provides a computer-readable storage medium. The computer-readable storage medium is configured to store a computer program (which may also be referred to as code or instructions). When the computer program is run on a computer, the method in the first aspect or the second aspect and any possible implementation is implemented.

According to a seventh aspect, an embodiment of this application provides a computer program product. The computer program product includes a computer program (which may also be referred to as code or instructions). When the computer program is run, a computer is enabled to perform the method in the first aspect or the second aspect and any possible implementation.

According to an eighth aspect, an embodiment of this application provides a chip. The chip includes a processor, the processor is configured to execute instructions, and when the processor executes the instructions, the chip is enabled to perform the method in the first aspect or the second aspect and any possible implementation. Optionally, the chip further includes a communication interface, and the communication interface is configured to receive a signal or send a signal.

According to a ninth aspect, an embodiment of this application provides a communication system. The communication system includes at least one of the communication apparatus in the third aspect, the communication apparatus in the fourth aspect, the communication apparatus in the fifth aspect, or the chip in the eighth aspect.

In addition, in a process of performing the method in the first aspect or the second aspect and any possible implementation, a process related to sending information and/or receiving information or the like in the method may be understood as a process of outputting information by a processor and/or a process of receiving input information by the processor. When outputting the information, the processor may output the information to a transceiver (or a communication interface or a sending module), so that the transceiver transmits the information. After the information is output by the processor, other processing may further need to be performed on the information before the information reaches the transceiver. Similarly, when the processor receives the input information, the transceiver (or a communication interface or a sending module) receives the information, and inputs the information into the processor. Further, after the transceiver receives the information, other processing may need to be performed on the information before the information is input into the processor.

Based on the foregoing principle, for example, sending information in the foregoing method may be understood as outputting information by the processor. For another example, receiving information may be understood as receiving input information by the processor.

Optionally, operations such as transmitting, sending, and receiving related to the processor may be more generally understood as operations such as outputting, receiving, and inputting of the processor, unless otherwise specified, or provided that the operations do not contradict actual functions or internal logic of the operations in related descriptions.

Optionally, in a process of performing the method in the first aspect or the second aspect and any possible implementation, the processor may be a processor specially configured to perform the method, or may be a processor that performs the method by executing computer instructions in a memory, for example, a general-purpose processor. The memory may be a non-transitory (non-transitory) memory, for example, a read-only memory (Read-Only Memory, ROM). The memory and the processor may be integrated on a same chip, or may be separately disposed on different chips. A type of the memory and a manner of disposing the memory and the processor are not limited in this embodiment of this application.

In a possible implementation, the at least one memory is located outside an apparatus.

In another possible implementation, the at least one memory is located inside the apparatus.

In still another possible implementation, a part of the at least one memory is located inside the apparatus, and another part of the memory is located outside the apparatus.

In this application, the processor and the memory may alternatively be integrated into one component. In other words, the processor and the memory may alternatively be integrated together.

In embodiments of this application, a plurality of sending configurations are obtained, and sounding signals generated based on the sending configurations are orthogonal to each other, so that each non-terrestrial device can obtain a valid sounding signal. In this way, a problem that a sounding signal cannot be continuously sent based on a same sending configuration as the sounding signal sent by the terminal device reaches the non-terrestrial devices at quite different times and frequencies can be resolved, and each non-terrestrial device in a coverage overlapping boundary region can effectively obtain signal strength of a sounding signal sent by the terminal device.

### BRIEF DESCRIPTION OF DRAWINGS

To describe technical solutions in embodiments of this application more clearly, the following briefly describes accompanying drawings used in describing embodiments of this application. It is clear that the accompanying drawings in the following descriptions show merely some embodiments of this application, and a person of ordinary skill in the art may derive other drawings from these accompanying drawings without creative efforts.
FIG. 1A is a diagram of an architecture of a communication system according to an embodiment of this application;
FIG. 1B is a diagram of an architecture of a communication system according to an embodiment of this application;
FIG. 2A is a diagram of frequency offset interference according to an embodiment of this application;
FIG. 2B is a diagram of time offset interference according to an embodiment of this application;
FIG. 2C is a diagram of directional interference according to an embodiment of this application;
FIG. 3A is a diagram of an architecture of a communication system according to an embodiment of this application;
FIG. 3B is a diagram of an architecture of a communication system according to an embodiment of this application;
FIG. 4 is a schematic flowchart of a communication method according to an embodiment of this application;
FIG. 5 is a diagram of an overlapping boundary region according to an embodiment of this application;
FIG. 6 is a diagram of cell switching according to an embodiment of this application;
FIG. 7 is a diagram of beam switching according to an embodiment of this application;
FIG. 8 is a diagram of a structure of a communication apparatus according to an embodiment of this application;
FIG. 9 is a diagram of a structure of a communication apparatus according to an embodiment of this application; and
FIG. 10 is a diagram of a structure of a chip according to an embodiment of this application.

### DESCRIPTION OF EMBODIMENTS

To make objectives, technical solutions, and advantages of this application clearer, the following describes embodiments of this application with reference to accompanying drawings in embodiments of this application.

The terms "first", "second", and the like in the specification, claims, and accompanying drawings of this application are used to distinguish between different objects, but are not used to describe a specific sequence. In addition, the terms "including" and "having" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

Reference to "embodiment" in the specification means that specific features, structures, or characteristics described in combination with the embodiment may be included in at least one embodiment of this application. A phrase shown at various locations in the specification may not necessarily refer to a same embodiment, nor an independent or optional embodiment exclusive from another embodiment. A person skilled in the art may explicitly and implicitly understand that, in embodiments of this application, unless otherwise specified or a logical conflict occurs, terms and/or descriptions in embodiments are consistent and may be referenced by each other, and technical features in different embodiments may be combined to form a new embodiment based on an internal logical relationship.

It should be understood that, in this application, "at least one (item)" means one or more, "a plurality of" means two or more, "at least two (items)" means two, three, or more, and "and/or" is used to describe an association relationship between associated objects, and indicates that there may be three relationships. For example, "A and/or B" may indicate that only A exists, only B exists, and both A and B exist, where A and B may be singular or plural. The character "/" generally indicates an "or" relationship between the associated objects. The expression "at least one of the following items (pieces)" or a similar expression means any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

This application provides a communication method. Optionally, the communication method may be applied to a non-terrestrial network (non-terrestrial network, NTN) communication scenario. To describe solutions of this application more clearly, the following first describes some knowledge related to NTN communication.

With development of information technologies, modern communication systems have more urgent requirements on efficiency, mobility, and diversity of communication. Currently, in some important application scenarios, for example, in space communication, aviation communication, maritime communication, military communication, and other fields, non-terrestrial devices such as satellites, uncrewed aerial vehicles, and high-altitude platforms are indispensable.

For ease of description, the following uses a non-terrestrial device represented by a satellite as an example for description.

Satellite communication has characteristics of a long communication distance, a large coverage area, and flexible networking, which can provide communication services for both fixed terminals and mobile terminals. A conventional terrestrial network cannot provide seamless coverage for terminal devices, especially in a place where a base station cannot be deployed, such as a sea, a desert, or air. Therefore, an NTN is introduced into a 5th generation (the 5th generation, 5G) mobile communication system, which provides seamless coverage communication for terminal devices by deploying a base station or a part of base station functions on a high-altitude platform or a satellite. In addition, the high-altitude platform or the satellite is less subject to natural disasters, so that reliability of the 5G system can be improved. In an NTN deployed based on a satellite, the satellite covers the ground by using different beams, to form a satellite cell, and a terminal device may be covered by a plurality of satellite cells at a same moment.

Satellite communication systems may be classified into the following three types based on orbit altitudes of satellites:
a geostationary earth orbit (geostationary earth orbit, GEO) satellite communication system, also referred to as a synchronous orbit satellite system, a medium earth orbit (medium earth orbit, MEO) satellite communication system, and a low earth orbit (low earth orbit, LEO) satellite communication system.

A GEO satellite has an orbit altitude of 35786 km, whose main advantage is capable of remaining stationary relative to the ground and providing a large coverage area. Disadvantages are as follows: (1) An orbit of the GEO satellite is far away from the earth, and a free space propagation loss is large. As a result, a communication link budget is tight. To increase a transmit/receive gain, an antenna with a large diameter needs to be configured for the satellite. (2) A communication transmission delay is long, and a round-trip delay may reach about 500 ms, which cannot meet requirements of real-time services. (3) The GEO has insufficient orbit resources and high transmission costs, and cannot provide coverage for polar regions of the earth.

The MEO satellite has an orbit altitude of 2000 km to 35786 km, whose advantage is that global coverage may be implemented by using a smaller quantity of satellites. However, the MEO satellite has a higher orbit altitude than the LEO satellite, whose transmission delay is still longer than that of the LEO satellite. Based on the advantage and disadvantage of the MEO satellite in communication, the MEO satellite is mainly used for positioning and navigation.

The LEO satellite has an orbit altitude of 300 km to 2000 km. The LEO satellite has a lower orbit altitude than the MEO and the GEO, and has advantages of a short data transmission delay, a small transmission loss, and low transmission costs. To improve an overall signal processing capability and communication throughput of a satellite network, a satellite operator increases a quantity of satellites to make up for a limitation of a single satellite in a communication capability. In a future NTN communication system, after a terminal device accesses the system, within a period of time, a plurality of satellites that can communicate with each other may be "visible" to the terminal device. In this case, the plurality of satellites may provide a communication service for the terminal device. This provides a basic condition for multi-satellite coordinated transmission.

The technical solutions provided in embodiments of this application may be applied to various communication systems, for example, a satellite communication system, and a system in which satellite communication and a cellular network are converged. The cellular network system may include but is not limited to a 5G system, a global system for mobile communication (global system of mobile communication, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, an advanced long term evolution (advanced long term evolution, LTE-A) system, a new radio (new radio, NR) system, an evolved system of the NR system, an LTE-based access to unlicensed spectrum (LTE-based access to unlicensed spectrum, LTE-U) system, an NR-based access to unlicensed spectrum (NR-based access to unlicensed spectrum, NR-U) system, a universal mobile telecommunication system (universal mobile telecommunication system, UMTS), a worldwide interoperability for microwave access (worldwide interoperability for microwave access, WiMAX) communication system, a wireless local area network (wireless local area network, WLAN), wireless fidelity (wireless fidelity, Wi-Fi), a next generation communication system, or another communication system. Generally, a conventional communication system supports a finite quantity of connections and is easy to implement. However, with development of communication technologies, a mobile communication system not only supports conventional communication, but also supports, for example, device to device (device to device, D2D) communication, machine to machine (machine to machine, M2M) communication, machine type communication (machine type communication, MTC), vehicle to vehicle (vehicle to vehicle, V2V) communication, and other communication systems evolved in the future. Embodiments of this application may also be applied to these communication systems. The satellite communication system may include various non-terrestrial network systems, for example, networks in which radio frequency transmission is performed by a satellite or an uncrewed aircraft system (uncrewed aircraft system, UAS) platform, which are not listed one by one herein.

For example, the following uses an NTN system as an example to provide a specific application scenario of this solution. The NTN system may be specifically a satellite communication system or another non-terrestrial network system. The data transmission method in this solution may be applied to a satellite communication scope.

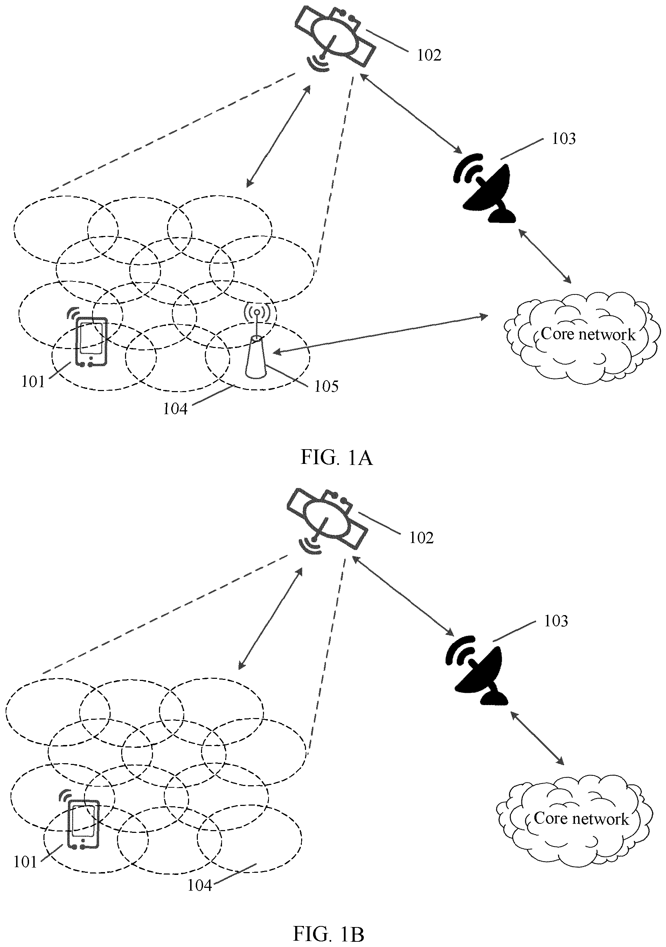

Refer to FIG. 1A and FIG. 1B. A 5G communication system is used as an example. FIG. 1A and FIG. 1B are diagrams of architectures of several communication systems according to embodiments of this application.

As shown in FIG. 1A and FIG. 1B, 104 represents a cell coverage region of a satellite 102, and there may be one or more terminal devices 101 and/or network devices 105 in the coverage region. The cell coverage region 104 may be a region covered by one or more beams of the satellite, or regions at a same cell level in a same NR system.

In FIG. 1A, the terrestrial terminal device 101 accesses a network through a 5G new radio interface; and the network device 105 (for example, a 5G base station) may be deployed on the ground, and is directly connected to a 5G core network on the ground. This type of communication architecture is also referred to as a transparent satellite network architecture, where the base station is visible on the ground. In addition, there is a radio link between satellites, to perform signaling exchange and user data transmission between base stations.

In FIG. 1B, the terrestrial terminal device 101 accesses a network through a 5G new radio interface, and the network device 105 (for example, a 5G base station) may be deployed on the satellite, and is connected to a 5G core network on the ground by using a radio link and a terrestrial station 103. This type of communication architecture is also referred to as a regenerative satellite network architecture, where the base station or a part of base station functions are visible on the satellite. In addition, there is a radio link between satellites, to perform signaling exchange and user data transmission between base stations.

It may be understood that in actual deployment, the satellite in the foregoing system may be replaced with another NTN device such as a high-altitude platform (high-altitude platform station, HAPS). This is not limited in this application.

Network elements in the scenario and their interfaces are described as follows:
The terminal device is a mobile device supporting a 5G new radio interface, typically for example, a user terminal or a wearable device, and may access a satellite network through an air interface and initiate call, internet access, and other services.

The 5G base station mainly provides a radio access service, schedules a radio resource for an access terminal, provides a reliable radio transmission protocol and data encryption protocol, and the like.

The 5G core network provides services such as user access control, mobility management, session management, user security authentication, and charging, which includes a plurality of functional units, and may be divided into a control plane function entity and a data plane function entity.

The terrestrial station is responsible for forwarding signaling and service data between the satellite base station and the 5G core network.

The 5G new radio interface is a radio link between the user equipment and the base station.

An Xn interface is an interface between 5G base stations and is configured for signaling exchange, such as switching.

An NG interface is an interface between the 5G base station and the 5G core network, and mainly exchanges non-access stratum (non-access stratum, NAS) and other signaling of the core network and user service data.

The technical solutions provided in this application mainly relate to two execution bodies: a network device and a terminal device, and may be applied to a communication system such as 5G, and in particular, to a communication process of a non-terrestrial network.

The terminal device in embodiments of this application includes but is not limited to an apparatus configured to receive/send a communication signal via a wired connection, for example, via a public switched telephone network (public switched telephone network, PSTN), digital subscriber line (digital subscriber line, DSL), digital cable, or direct cable connection; and/or another data connection network; and/or via a wireless interface, for example, via a cellular network, a wireless local area network (wireless local area network, WLAN), a digital television network such as a digital video broadcast-handheld (digital video broadcast-handheld, DVB-H) network, a satellite network, an amplitude modulation-frequency modulation (amplitude modulation-frequency modulation, AM-FM) broadcast transmitter; and/or via another terminal device; and/or an internet of things (internet of things, IoT) device. A terminal device configured to perform communication through a wireless interface may be referred to as a "wireless communication terminal", a "wireless terminal", or a "mobile terminal". Examples of the terminal device include but are not limited to a satellite phone or a cellular phone; a personal communication system (personal communication system, PCS) terminal that may combine a cellular radio phone with data processing, faxing, and data communication capabilities; a personal digital assistant (personal digital assistant, PDA) that may include a radio phone, a pager, internet/intranet access, a web browser, a notepad, a calendar, and/or a global positioning system (global positioning system, GPS) receiver; and a conventional laptop and/or palmtop receiver or another electronic apparatus including a radio phone transceiver. The terminal device may also be referred to as user equipment (user equipment, UE), an access terminal, a subscriber unit, a subscriber station, a mobile station, a mobile, a remote station, a remote terminal, a mobile device, a user terminal, a terminal, a wireless communication device, a user agent, or a user apparatus. Alternatively, the terminal device may be a cellular phone, a cordless phone, a session initiation protocol (session initiation protocol, SIP) phone, a wireless local loop (wireless local loop, WLL) station, a PDA, a handheld device with a wireless communication function, a computing device or another processing device connected to a wireless modem, an in-vehicle device, a wearable device, a terminal device in a 5G network, a terminal device in a future evolved public land mobile network (public land mobile network, PLMN), or the like.

The network device in embodiments of this application may provide communication coverage in a specific geographical region, may communicate with one or more terminal devices located in the coverage region, and may be configured to communicate with one or more base stations having a part of terminal functions (for example, communication between a macro base station and a micro base station such as an access point). Optionally, the network device may be a satellite, a base transceiver station (base transceiver station, BTS) in a GSM system or a CDMA system, an evolved NodeB (evolved NodeB, eNB) in an LTE system, a next-generation node base station (next generation node base station, gNB) in a 5G system or an NR system, another satellite base station, or a satellite relay node. Alternatively, the network device may be an access point (access point, AP), a transmission reception point (transport point, TRP), a central unit (central unit, CU), or another network entity, and may include a part or all of functions of the foregoing network entities.

It may be understood that a device having a communication function in a network/system in embodiments of this application may be referred to as a communication device. The communication systems shown in FIG. 1A and FIG. 1B are used as examples. The communication device may include a network device and a terminal device that have a communication function. The network device and the terminal device may be specific devices described above, and details are not described herein again. The communication device may further include another device in the communication systems, for example, a network controller, a mobility management entity, or other network entities. This is not limited in embodiments of this application.

It should be further noted that in this application, the descriptions "satellite" and "satellite network device" are equivalent. That is, a satellite mentioned in this application represents a set of a satellite and another network device that are related to satellite communication.

It may be understood that a cell in the NTN system may be a projection region of a beam of a satellite on the ground, or may be a projection region of a plurality of beams of a satellite on the ground, or may be a part of a projection region of one or more beams on the ground. This is not limited in embodiments of this application.

It may be understood that a plurality of TRPs that provide continuous coverage and operate on a same frequency band may be combined into one logical cell. The combined logical cell may be referred to as a hyper cell (Hyper Cell). In this way, a user does not need to be handed over when moving in the logical cell. For example, when 12 TRPs that provide continuous coverage and operate on a same frequency band are combined into one hyper cell, a quantity of times of user switching is reduced by 90% from 12 to 1. When six TRPs that provide continuous coverage and operate on a same frequency band are combined into one hyper cell, a quantity of times of user switching is reduced by 80% from 6 to 1. When three TRPs that provide continuous coverage and operate on a same frequency band are combined into one hyper cell, a quantity of times of user switching is reduced by 60% from 3 to 1. The hyper cell functions to reduce signaling overheads caused by switching, improve edge user experience, and reduce a service drop rate caused by switching failures, and is usually applied to high-speed railways, subways, tunnels, or other high-speed scenarios.

It may be understood that high-speed moving satellites may serve a same region in a relay manner. Satellites in an orbit may be considered as different TRPs in a hyper cell. An intersatellite link between the satellites in the orbit may be considered as a connection between TRPs. Satellites in different orbits may form different hyper cells.

Based on the foregoing hyper cell networking manner, the gNB determines, by measuring reference signal received power (reference signal received power, RSRP) of a sounding signal sent by the UE at each TRP, whether to perform switching between TRPs. When RSRP of a sounding signal at a candidate TRP exceeds RSRP of a sounding signal at a current serving TRP by a specific threshold, the UE is indicated to switch to the candidate TRP.

In cellular communication, when the UE is located in an overlapping boundary region covered by two TRPs, the UE continuously sends a sounding signal by using a same sending configuration, so that different TRPs measure signal strength corresponding to the sounding signal, to indicate the UE to select a proper TRP for communication.

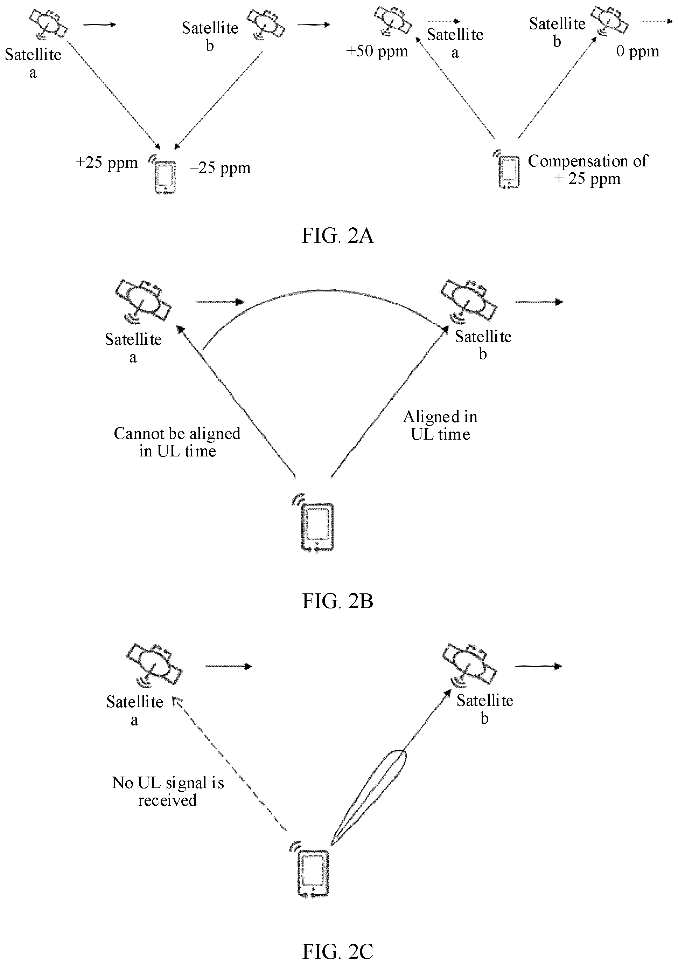

However, in satellite communication, if the UE continuously sends a sounding signal based on a same sending configuration in a manner similar to that in cellular communication, satellites in a coverage overlapping boundary region cannot effectively obtain signal strength of the sounding signal sent by the UE, mainly due to factors such as frequency offset interference, time offset interference, and directional interference. For details, refer to FIG. 2A to FIG. 2C.

FIG. 2A is a diagram of frequency offset interference according to an embodiment of this application.

As shown in FIG. 2A, when UE is located in an overlapping boundary region covered by a satellite a and a satellite b, after sensing a frequency offset through downlink synchronization, the UE performs corresponding compensation for a sent signal during uplink signal sending. For example, a downlink frequency offset of the satellite a is +25 ppm, and a downlink frequency offset of the satellite b is -25 ppm. The downlink frequency offsets of the two satellites are greatly different, but the UE can compensate for a channel frequency offset of only one of the satellites. Therefore, an uplink signal reaching the other satellite has a large frequency offset. For example, if compensation is performed for an uplink channel frequency offset of the satellite b, an uplink frequency offset of the satellite a becomes +50 ppm, which is far beyond tolerance of an existing communication system (a common frequency offset range in cellular communication is generally less than 0.5 ppm). Consequently, a sounding signal sent by the UE cannot be successfully demodulated by the satellite a, and great interference is generated.

FIG. 2B is a diagram of time offset interference according to an embodiment of this application.

As shown in FIG. 2B, when UE is located in an overlapping boundary region covered by a satellite a and a satellite b, although the UE is in the overlapping boundary region, a difference between actual distances between the UE and the two satellites may be very large, and is far beyond a range that can be covered by an existing communication system. When a sounding signal sent by the UE is aligned with one of the satellites (for example, the satellite b), a time at which the sounding signal reaches the other satellite (for example, the satellite a) usually cannot be aligned. Consequently, the sounding signal cannot be successfully demodulated by the satellite a, and great interference is generated.

FIG. 2C is a diagram of directional interference according to an embodiment of this application.

As shown in FIG. 2C, a large terminal device in a satellite communication scenario usually has strong directivity. When the UE communicates with one satellite (for example, a satellite b) by using one beam, the other satellite (for example, a satellite a) cannot receive a signal.

It can be learned from the foregoing descriptions that, in a satellite hyper cell, the UE cannot continuously send a sounding signal based on a same sending configuration in a manner similar to that in cellular communication, so that different TRPs detect signal strength of the UE. That is, in a coverage overlapping boundary region, satellites cannot effectively obtain signal strength of a sounding signal sent by the UE.

To resolve the foregoing problem, embodiments of this application provide a new communication method. In the communication method, a plurality of sending configurations are obtained, and sounding signals generated based on the sending configurations are orthogonal to each other, so that each non-terrestrial device can obtain a valid sounding signal. In this way, a problem that a sounding signal cannot be continuously sent based on a same sending configuration as a sounding signal sent by a terminal device reaches the non-terrestrial devices at quite different times and frequencies can be resolved, and each non-terrestrial device in a coverage overlapping boundary region can effectively obtain signal strength of a sounding signal sent by the terminal device.

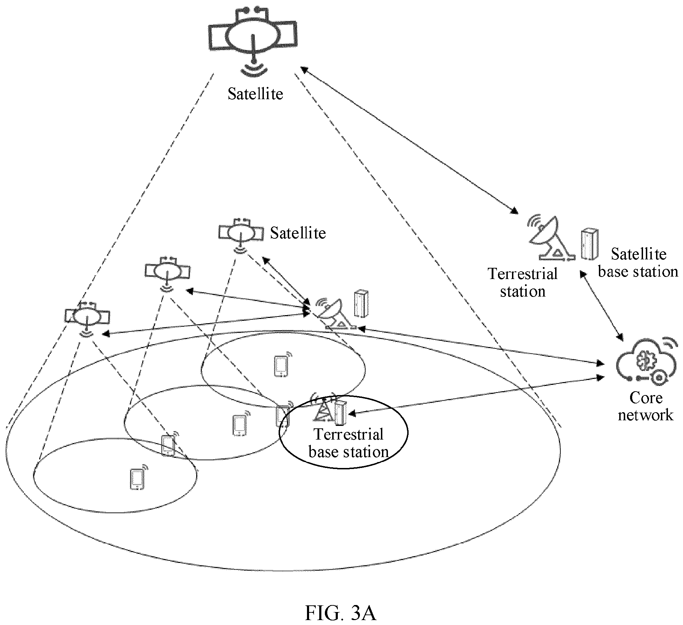

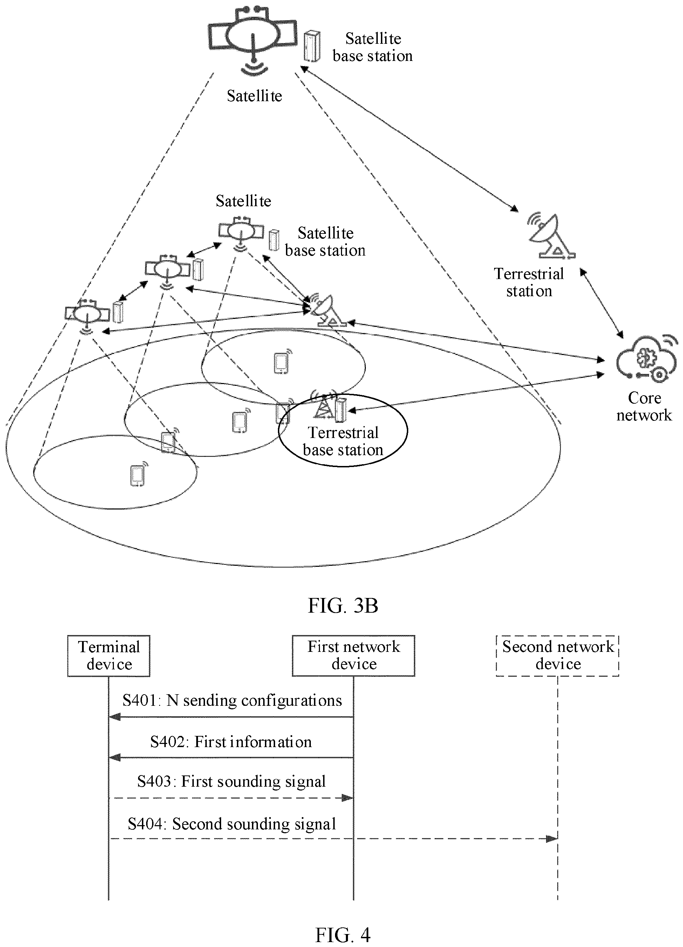

The following describes, with reference to FIG. 3A and FIG. 3B, a communication system to which the communication method provided in embodiments of this application is applicable.

FIG. 3A and FIG. 3B are diagrams of architectures of several communication systems according to embodiments of this application.

FIG. 3A shows a network architecture in a transparent mode. A base station entity is on the ground. For deployment of a basic architecture of the network architecture, refer to FIG. 1A. Details are not described herein again. A satellite has a relay forwarding function. A terrestrial station has a function of a base station or a part of base station functions. In this case, the terrestrial station may be considered as a base station. Alternatively, the base station and the terrestrial station may be separately deployed. In this case, a delay of a feeder link includes two parts: a delay from the satellite to the terrestrial station and a delay from the terrestrial station to the gNB. In embodiments of this application, the transparent mode is described by using an example in which the terrestrial station and the gNB are located together or close to each other. When the terrestrial station is far away from the gNB, a feeder link delay is a sum of a delay from the satellite to the terrestrial station and a delay from the terrestrial station to the gNB.

FIG. 3B shows a network architecture in a regenerative mode. A base station entity is carried on a satellite. For deployment of a basic architecture of the network architecture, refer to FIG. 1B. The satellite has a data processing capability and has a function of a base station or a part of base station functions. In this case, the satellite may be considered as a base station. Base stations of an NTN and a terrestrial network may be interconnected via a common core network, or assistance and interconnection with higher timeliness may be implemented through an interface defined between the base stations. In NR, an interface between base stations is referred to as an Xn interface, and an interface between a base station and a core network is referred to as an NG interface. Both NTN nodes and terrestrial nodes in the network architecture may implement interworking and collaboration through the foregoing interfaces.

In FIG. 3A and FIG. 3B, a plurality of satellites serve a same region in a relay manner, an overlapping boundary region exists between regions covered by the satellites or a part of the satellites, and different satellites may form different hyper cells. When UE is located in the overlapping boundary region, the UE needs to send sounding signals to the satellites to select a proper satellite for communication.

FIG. 4 is a schematic flowchart of a communication method according to an embodiment of this application. The communication method may be applied to the field of NTN communication technologies, and the communication method includes but is not limited to the following steps.

S401: A terminal device obtains N sending configurations, and correspondingly, a first network device sends the N sending configurations to the terminal device.

The terminal device in this embodiment of this application is a device equipped with a processor that can be configured to execute computer-executable instructions, and may be an in-vehicle terminal, a handheld terminal, or the like. Specifically, the terminal device may be the UE in FIG. 1A, FIG. 1B, FIG. 3A, or FIG. 3B, and is configured to perform the communication method in this embodiment of this application, to resolve a problem that a sounding signal cannot be continuously sent based on a same sending configuration as the sounding signal sent by the terminal device reaches non-terrestrial devices at quite different times and frequencies, so that each non-terrestrial device in a coverage overlapping boundary region can effectively obtain signal strength of a sounding signal sent by the terminal device.

The first network device in this embodiment of this application is a device equipped with a processor that can be configured to execute computer-executable instructions, and may be specifically the base station in FIG. 1A, FIG. 1B, FIG. 3A, or FIG. 3B.

Each of the N sending configurations may be used to generate a sounding signal to be sent to one of M non-terrestrial devices. N sounding signals generated based on the N sending configurations are orthogonal. The N sounding signals may be completely orthogonal, or may be not completely orthogonal, that is, partial interference is allowed. Each of the generated sounding signals may be a signal that meets uplink energy detection, such as a sounding reference signal (sounding reference signal, SRS) or a preamble signal (preamble). That is, a receiver may obtain, by using the sounding signal, energy strength of sending by a transmitter.

The M non-terrestrial devices separately correspond to M cells. It should be understood that the M cells herein may be regions separately covered by the M non-terrestrial devices, or may be cells obtained by combining coverage regions corresponding to a plurality of non-terrestrial devices. This is not limited in this embodiment of this application. An overlapping region exists between the M cells, which may be a partial region in which at least two cells overlap, or may be a partial region in which all the M cells overlap. Cell switching may occur between the M non-terrestrial devices in the overlapping region. The non-terrestrial devices include NTN devices such as satellites, uncrewed aerial vehicles, or high-altitude platforms. This is not limited in this embodiment of this application. For ease of description, the following uses a satellite as an example to describe content related to a non-terrestrial device.

N is an integer greater than or equal to 2, and M is an integer greater than or equal to N.

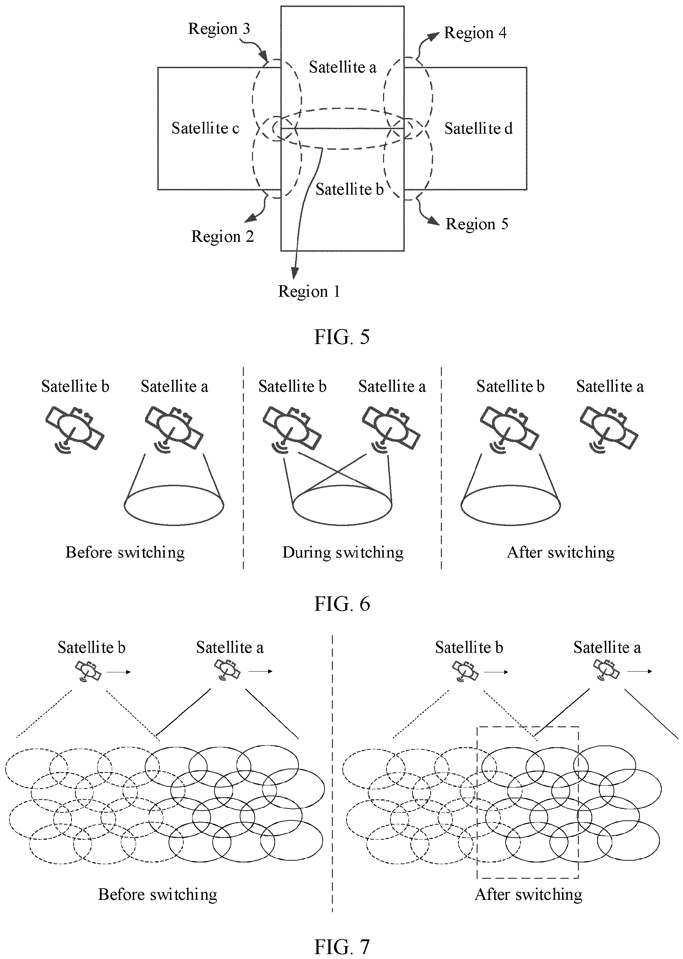

For example, FIG. 5 is a diagram of an overlapping boundary region according to an embodiment of this application.

As shown in FIG. 5, one or more overlapping boundary regions exist between regions covered by satellites, an overlapping boundary region 1 exists between a coverage region (cell a) of a satellite a and a coverage region (cell b) of a satellite b, an overlapping boundary region 2 exists between the coverage region (cell b) of the satellite b and a coverage region (cell c) of a satellite c, an overlapping boundary region 3 exists between the coverage region (cell a) of the satellite a and the coverage region (cell c) of the satellite c, an overlapping boundary region 4 exists between the coverage region (cell a) of the satellite the and a coverage region (cell d) of the satellite d, and an overlapping boundary region 5 exists between the coverage region (cell b) of the satellite b and the coverage region (cell d) of the satellite d.

Optionally, there may be further an overlapping boundary region existing between coverage regions of more than two satellites. For example, an overlapping boundary region 6 exists between the coverage region (cell a) of the satellite a, the coverage region (cell b) of the satellite b, and the coverage region (cell c) of the satellite c, and an overlapping boundary region 7 exists between the coverage region (cell a) of the satellite a, the coverage region (cell b) of the satellite b, and the coverage region of the satellite d (cell d).

It may be understood that FIG. 5 merely shows the overlapping boundary regions existing between coverage regions of two satellites and the overlapping boundary regions existing between coverage regions of three satellites as examples of overlapping boundary regions. In an actual scenario, there may be further an overlapping boundary region existing between coverage regions of four satellites and an overlapping boundary region existing between coverage regions of N satellites. The overlapping boundary regions are not listed one by one in this application, and shall not constitute a limitation on this application.

S402: The terminal device obtains first information, and correspondingly, the first network device sends the first information to the terminal device.

The first information includes information about switching between the M non-terrestrial devices in the overlapping region existing between the M cells corresponding to the M non-terrestrial devices, and may be used to determine to separately send the N correspondingly generated sounding signals by using the N sending configurations.

In a possible embodiment, the first information indicates one or more of location information of the overlapping region and time information corresponding to the overlapping region.

It may be understood that the first information includes one or more of the location information of the overlapping region and the time information corresponding to the overlapping region. Alternatively, it may be understood that the first information does not include the location information of the overlapping region or the time information corresponding to the overlapping region, but the location information of the overlapping region and the time information corresponding to the overlapping region may be obtained based on information included in the first information. The time information corresponding to the overlapping region may be information about a moment or information about a time period.

According to this embodiment of this application, the information about switching between the M non-terrestrial devices in the overlapping region may be determined based on the location information of the overlapping region and the time information corresponding to the overlapping region that are indicated by the first information, and then it is determined to separately send the N correspondingly generated sounding signals by using the N sending configurations, so that each non-terrestrial device in a coverage overlapping boundary region can effectively obtain signal strength of a sounding signal sent by the terminal device.

For example, in FIG. 5, the first information includes information about switching between the satellite a and the satellite b in the overlapping boundary region 1, and may specifically include location information of the overlapping boundary region 1 or time information corresponding to the overlapping boundary region 1. The first information is used to determine to send a first sounding signal to the satellite a by using a first sending configuration, and send a second sounding signal to the satellite b by using a second sending configuration. The first sounding signal and the second sounding signal are orthogonal. The first sounding signal and the second sounding signal may be completely orthogonal, or may be not completely orthogonal, that is, partial interference is allowed. This is not limited in this embodiment of this application.

For example, in FIG. 5, the first information further includes information about switching between the satellite a, the satellite b, and the satellite c in the overlapping boundary region 6, and may specifically include location information of the overlapping boundary region 6 or time information corresponding to the overlapping boundary region 6. The first information is used to determine to send the first sounding signal to the satellite a by using the first sending configuration, send the second sounding signal to the satellite b by using the second sending configuration, and send a third sounding signal to the satellite c by using a third sending configuration. The first sounding signal, the second sounding signal, and the third sounding signal are orthogonal. The first sounding signal, the second sounding signal, and the third sounding signal may be completely orthogonal, or may be not completely orthogonal, that is, partial interference is allowed. This is not limited in this embodiment of this application.

It may be understood that, in this embodiment of this application, FIG. 5 merely shows examples of overlapping boundary regions to describe content and functions of first information associated with the overlapping boundary regions. In an actual scenario, there may be further an overlapping boundary region existing between coverage regions of four satellites. In this case, the first information includes information about switching between the four satellites in the corresponding overlapping boundary region, and is used to determine to separately send different sounding signals to the four satellites by using different sending configurations, and the sounding signals are orthogonal. Further, there may be an overlapping boundary region existing between coverage regions of N satellites. In this case, the first information includes information about switching between the N satellites in the corresponding overlapping boundary region, and is used to determine to separately send different sounding signals to the N satellites by using different sending configurations, and the sounding signals are orthogonal. The overlapping boundary regions are not listed one by one in this application, and shall not constitute a limitation on this application.

The following uses the overlapping boundary regions in FIG. 5 as examples to describe in detail sending configurations and first information in different scenarios.

### Scenario 1: earth-moving beam and handheld terminal device.

In the scenario of an earth-moving beam and a handheld terminal device, a coverage region of a satellite moves with movement of the satellite. A signal transmitted by the UE is not clearly directional, and may be received by a plurality of satellites. Location information of an overlapping region (the region 1) between a first cell (the coverage region of the satellite a) and a second cell (the coverage cell of the satellite b) changes over time.

The first network device configures the first sending configuration (a sending configuration a) and the second sending configuration (a sending configuration b) for the UE. The first sending configuration (sending configuration a) is used to generate the first sounding signal (a sounding signal a), the second sending configuration (sending configuration b) is used to generate the second sounding signal (a sounding signal b), and the sounding signal a and the sounding signal b are orthogonal. The first network device may be a base station corresponding to the first cell or a base station corresponding to the second cell, or may be another device.

The first network device sends first information to the UE. The first information includes the information about switching between the satellite a and the satellite b in the region 1, and may specifically include the location information of the region 1 and a first time corresponding to the region 1. Details may be shown in the following table:

| Region identifier | Region location | First time |
|---|---|---|
| Region 1 | Lat=[a1, b1] and lon=[c1, d1] | t1 |
| Region 2 | Lat=[a2, b2] and lon=[c2, d2] | t2 |
| Region 3 | Lat=[a3, b3] and lon=[c3, d3] | t3 |
| Region 4 | Lat=[a4, b4] and lon=[c4, d4] | t4 |
| Region 5 | Lat=[a5, b5] and lon=[c5, d5] | t5 |
| ... | ... | ... |

It can be learned from the foregoing table that, location information of an overlapping boundary region may be described based on a predefined grid region in a ground coordinate system. For example, the location information of the region 1 is described by using a longitude and a latitude as follows: Lat=[a1, b1] and lon=[c1, d1]. Alternatively, the location information of the overlapping boundary region may be described based on an associated satellite coordinate system region, for example, an angular region. A coordinate system is established by using the satellite a as an origin, a region center direction is a reference direction, and a location of the region 1 is described by using angular information relative to the reference direction. The first time is a timestamp corresponding to the overlapping boundary region. For example, a timestamp corresponding to the region 1 is t1. That is, at the moment t1, the coverage region of the satellite a and the coverage region of the satellite b overlap in the region 1, whose location information is Lat=[a1, b1] and lon=[c1, d1].

Similarly, a principle of location information of the region 2 to the region 5 and corresponding first times is similar to that of the region 1, and details are not described herein again.

The first information is used to determine that when the UE is in the overlapping region (region 1) between the satellite a and the satellite b at a current time, the UE sends the first sounding signal (sounding signal a) to the satellite a by using the first sending configuration (sending configuration a), and sends the second sounding signal (sounding signal b) to the satellite b by using the second sending configuration (sending configuration b). An association relationship between an activation condition of the first information and sending configurations may be specifically shown in the following table:

| Activation condition | Activated sending configurations |
|---|---|
| Region 1 | Sending configuration a and sending configuration b |
| Region 2 | Sending configuration b and sending configuration c |
| Region 3 | Sending configuration a and sending configuration c |
| Region 4 | Sending configuration a and sending configuration d |
| Region 5 | Sending configuration b and sending configuration d |
| ... | ... |

It can be learned from the foregoing table that, when the UE is located in an overlapping boundary region at a current moment, the UE is triggered to send sounding signals based on corresponding sending configurations. A principle of sending configurations corresponding to the region 2 to the region 5 is similar to that of the region 1, and details are not described herein again.

Because the coverage region of the satellite moves with movement of the satellite, the location information of the region 1 also changes over time. That is, the location information of the region 1 at the first time is different from location information at the current time. Therefore, the location information of the region 1 at the current time (denoted as a second region) needs to be determined based on the location information of the region 1 at the first time (denoted as a first region), to determine, when the UE is in the second region at the current moment, to send the sounding signal a to the satellite a by using the sending configuration a, and send the sounding signal b to the satellite b by using the sending configuration b.

In a possible embodiment, the location information of the second region may be determined in the following manner:
A location change amount, denoted as a first location change amount, of a region covered in a time period from the first time to the current time is obtained based on location information of the satellite a or the satellite b at the first time and location information at the current time. Then, the location information of the region 1 at the current time (that is, the location information of the second region) is determined by adding the first location change amount to the location information of the region 1 at the first time (that is, the location information of the first region).

When the UE is located in the second region, it indicates that cell switching may occur on a satellite communicating with the UE in this case, that is, switching may occur between the satellite a and the satellite b in the region 1, and the UE is triggered to send, based on each sending configuration, a sounding signal correspondingly generated based on the sending configuration, that is, determine to send the sounding signal a to the satellite a by using the sending configuration a, and send the sounding signal b to the satellite b by using the sending configuration b.

In a possible embodiment, a sounding signal may be sent based on a corresponding sending configuration in the following manner:

A sending carrier and a sending time may be determined based on the sending configuration, and the corresponding sounding signal is sent by using the sending carrier and the sending time.

Optionally, the sending configuration includes time-frequency compensation information corresponding to the satellite and movement trajectory information of the satellite, and the sending carrier and the sending time may be determined based on the time-frequency compensation information corresponding to the satellite and the movement trajectory information of the satellite.

For example, the sending configuration a includes time-frequency compensation information corresponding to the satellite a and movement trajectory information of the satellite a. A sending carrier a may be determined based on the time-frequency compensation information corresponding to the satellite a, and a sending time a may be determined based on the movement trajectory information of the satellite a, to send the sounding signal a by using the sending carrier a and the sending time a. Similarly, the sending configuration b includes time-frequency compensation information corresponding to the satellite b and movement trajectory information of the satellite b. A sending carrier b may be determined based on the time-frequency compensation information corresponding to the satellite b, and a sending time b may be determined based on the movement trajectory information of the satellite b, to send the sounding signal b by using the sending carrier b and the sending time b.

According to this embodiment of this application, sending frequencies and sending times of the sounding signals are determined, so that the sounding signals are isolated from each other and do not interfere with each other, and each non-terrestrial device in a coverage overlapping boundary region can effectively obtain signal strength of a sounding signal sent by the terminal device.

According to this embodiment of this application, in the scenario of an earth-moving beam and a handheld terminal device, it is determined, based on the location information of the first region and the time information corresponding to the first region, that the terminal device is located in the second region, and then the terminal device is triggered to send, based on each sending configuration, a sounding signal correspondingly generated based on the sending configuration. In this way, a problem that a sounding signal cannot be continuously sent based on a same sending configuration as the sounding signal sent by the terminal device reaches the non-terrestrial devices at quite different times and frequencies can be resolved, and each non-terrestrial device in a coverage overlapping boundary region can effectively obtain signal strength of a sounding signal sent by the terminal device.

### Scenario 2: quasi-earth-fixed beam and handheld terminal device.

In the scenario of a quasi-earth-fixed beam and a handheld terminal device, a coverage region of a satellite is fixed relative to the ground. When the satellite flies away from the coverage region, the original coverage region is taken over by another satellite as a whole, and the coverage region does not move with movement of the satellite. A signal transmitted by the UE is not clearly directional, and may be received by a plurality of satellites. Location information of an overlapping region (the region 1) between a first cell (the coverage region of the satellite a) and a second cell (the coverage cell of the satellite b) does not change over time.

FIG. 6 is a diagram of cell switching according to an embodiment of this application.

As shown in FIG. 6, before cell switching occurs between the satellite a and the satellite b, the coverage region corresponding to the satellite a is completely fixed relative to the ground. When cell switching occurs between the satellite a and the satellite b, the satellite a flies away from the coverage region, and the original coverage region is taken over by the satellite b as a whole. After the cell switching occurs between the satellite a and the satellite b, the original coverage region is fixed relative to the ground, and location information does not change with movement of the satellite a or the satellite b.

The first network device configures the first sending configuration (a sending configuration a) and the second sending configuration (a sending configuration b) for the UE. The first sending configuration (sending configuration a) is used to generate the first sounding signal (a sounding signal a), the second sending configuration (sending configuration b) is used to generate the second sounding signal (a sounding signal b), and the sounding signal a and the sounding signal b are orthogonal. The first network device may be a base station corresponding to the first cell or a base station corresponding to the second cell, or may be another device.

The first network device sends first information to the UE. The first information includes the information about switching between the satellite a and the satellite b in the region 1, and may specifically include a second time corresponding to the region 1. Details may be shown in the following table:

| Region identifier | Second time |
|---|---|
| Region 1 | [T1, T2] |
| Region 2 | [T3, T4] |
| Region 3 | [T5, T6] |
| Region 4 | [T7, T8] |
| Region 5 | [T9, T10] |
| ... | ... |

It can be learned from the foregoing table that, the second time is a time period corresponding to an overlapping boundary region, and represents a time period within which switching occurs between two satellites in the overlapping boundary region. For example, the second time within which switching occurs between the satellite a and the satellite b in the region 1 is [T1, T2].

Similarly, a principle of second times corresponding to the region 2 to the region 5 is similar to that of the region 1, and details are not described herein again.

The first information is used to: when it is determined that a current time is within the second time, send the first sounding signal (sounding signal a) to the satellite a by using the first sending configuration (sending configuration a), and send the second sounding signal (sounding signal b) to the satellite b by using the second sending configuration (sending configuration b). An association relationship between an activation condition of the first information and sending configurations may be specifically shown in the following table:

| Activation condition | Activated sending configurations |
|---|---|
| Current time being within [T1, T2] | Sending configuration a and sending configuration b |
| Current time being within [T3, T4] | Sending configuration b and sending configuration c |
| Current time being within [T5, T6] | Sending configuration a and sending configuration c |
| Current time being within [T7, T8] | Sending configuration a and sending configuration d |
| Current time being within [T9, T10] | Sending configuration b and sending configuration d |
| ... | ... |

It can be learned from the foregoing table that, when the current time is within the second time **[T1,** T2], it indicates that cell switching may occur on a satellite communicating with the UE in this case, that is, switching may occur between the satellite a and the satellite b in the region 1 at the current time, and the UE is triggered to send, based on each sending configuration, a sounding signal correspondingly generated based on the sending configuration, that is, determine to send the sounding signal a to the satellite a by using the sending configuration a, and send the sounding signal b to the satellite b by using the sending configuration b. A principle of sending configurations corresponding to the region 2 to the region 5 is similar to that of the region 1, and details are not described herein.

In a possible embodiment, a sounding signal may be sent based on a corresponding sending configuration in the following manner:

A sending carrier and a sending time may be determined based on the sending configuration, and the corresponding sounding signal is sent by using the sending carrier and the sending time.

Optionally, the sending configuration includes time-frequency compensation information corresponding to the satellite and movement trajectory information of the satellite. The sending carrier may be determined based on the time-frequency compensation information corresponding to the satellite, and the sending time may be determined based on the movement trajectory information of the satellite.

For example, the sending configuration a includes time-frequency compensation information corresponding to the satellite a and movement trajectory information of the satellite a. A sending carrier a may be determined based on the time-frequency compensation information corresponding to the satellite a, and a sending time a may be determined based on the movement trajectory information of the satellite a, to send the sounding signal a by using the sending carrier a and the sending time a. Similarly, the sending configuration b includes time-frequency compensation information corresponding to the satellite b and movement trajectory information of the satellite b. A sending carrier b may be determined based on the time-frequency compensation information corresponding to the satellite b, and a sending time b may be determined based on the movement trajectory information of the satellite b, to send the sounding signal b by using the sending carrier b and the sending time b.

According to this embodiment of this application, sending frequencies and sending times of the sounding signals are determined, so that the sounding signals are isolated from each other and do not interfere with each other, and each non-terrestrial device in a coverage overlapping boundary region can effectively obtain signal strength of a sounding signal sent by the terminal device.

According to this embodiment of this application, in the scenario of a quasi-earth-fixed beam and a handheld terminal device, it is determined, based on a second time within which switching occurs between different non-terrestrial devices in an overlapping boundary region, that a current time is within the second time, and then the terminal device is triggered to send, based on each sending configuration, a sounding signal correspondingly generated based on the sending configuration. In this way, a problem that a sounding signal cannot be continuously sent based on a same sending configuration as the sounding signal sent by the terminal device reaches the non-terrestrial devices at quite different times and frequencies can be resolved, and each non-terrestrial device in a coverage overlapping boundary region can effectively obtain signal strength of a sounding signal sent by the terminal device.

### Scenario 3: progressive quasi-earth-fixed beam and handheld terminal device.

In the scenario of a progressive quasi-earth-fixed beam and a handheld terminal device, a coverage region of each beam of a satellite is fixed relative to the ground. When the satellite flies away from a coverage region, a beam that is the farthest in the original coverage region first stops coverage, and is taken over by another satellite, and then a beam that is the second farthest in the original coverage region stops coverage, and is taken over by another satellite. The coverage region is taken over between different satellites in a progressive beam-by-beam manner. The coverage region does not move with movement of the satellite. A signal transmitted by the UE is not clearly directional, and may be received by a plurality of satellites. Location information of an overlapping region (the region 1) between a first cell (the coverage region of the satellite a) and a second cell (the coverage cell of the satellite b) does not change over time.

FIG. 7 is a diagram of beam switching according to an embodiment of this application.

As shown in FIG. 7, before cell switching occurs between the satellite a and the satellite b, the coverage region corresponding to the satellite a is solid-line elliptic regions, the coverage region corresponding to the satellite b is dashed-line elliptic regions, and the coverage region corresponding to the satellite a and the coverage region corresponding to the satellite b are fixed relative to the ground. When beam switching (switching between a part of elliptical regions) occurs between the satellite a and the satellite b, the satellite a flies away from a coverage region of a beam, and the coverage region of the original beam is taken over by the satellite b as a whole. After the beam switching occurs between the satellite a and the satellite b, the coverage region corresponding to the satellite a stops covering a part of solid-line elliptic regions, and the coverage region corresponding to the satellite b is a part of dashed-line elliptic regions and the part of solid-line elliptic regions. The coverage region of the original beam is fixed relative to the ground, and location information does not change with movement of the satellite a or the satellite b.

The first network device configures the first sending configuration (a sending configuration a) and the second sending configuration (a sending configuration b) for the UE. The first sending configuration (sending configuration a) is used to generate the first sounding signal (a sounding signal a), the second sending configuration (sending configuration b) is used to generate the second sounding signal (a sounding signal b), and the sounding signal a and the sounding signal b are orthogonal. The first network device may be a base station corresponding to the first cell or a base station corresponding to the second cell, or may be another device.

The first network device sends first information to the UE. The first information includes information about switching between the satellite a and the satellite b in a beam (for example, a first beam) in the region 1, and may specifically include identification information of the first beam and a third time corresponding to the first beam. Details may be shown in the following table:

| Region identifier | Beam identifier | Third time |
|---|---|---|
| Region 1 | SSB 0 to SSB 3 | [T1, T2] |
| Region 2 | SSB 4 to SSB 7 | [T3, T4] |
| Region 3 | SSB 8 to SSB 11 | [T5, T6] |
| Region 4 | SSB 12 to SSB 15 | [T7, T8] |
| Region 5 | SSB 16 to SSB 19 | [T9, T10] |
| ... | ... | ... |

It can be learned from the foregoing table that, the beam identifier includes an identifier of each beam existing in the overlapping boundary region, and switching occurs between different satellites in the beams in a beam-by-beam manner, to complete switching in the entire overlapping boundary region. For example, the synchronization signal blocks (synchronization signal block, SSB) 0 to 3 exist in the region 1. The third time is a time period corresponding to each beam in the overlapping boundary region, and represents a time period within which switching occurs between two satellites in the beam in the overlapping boundary region. For example, the third time within which switching occurs between the satellite a and the satellite b in the SSB 0 to SSB 3 in the region 1 is [T1, T2].

Similarly, a principle of beam identifiers in the region 2 to the region 5 and third times corresponding to beams is similar to that of the region 1, and details are not described herein again.

It may be understood that the beam in this embodiment of this application is merely used as an example message for description. Optionally, the "beam" in this embodiment of this application may be replaced with a message such as a "broadcast signal" or a "pilot port", and the "beam identifier" may be correspondingly replaced with a message identifier such as a "broadcast signal identifier", a "pilot port identifier", or a "transmission state identifier". This should not constitute a limitation on this application.

The first information is used to: when it is determined that a current time is within the third time, send the first sounding signal (sounding signal a) to the satellite a by using the first sending configuration (sending configuration a), and send the second sounding signal (sounding signal b) to the satellite b by using the second sending configuration (sending configuration b). An association relationship between an activation condition of the first information and sending configurations may be specifically shown in the following table:

| Activation condition | Activated sending configurations |
|---|---|
| SSB 0 to SSB 3, and current time being within [T1, T2] | Sending configuration a and sending configuration b |
| SSB 4 to SSB 7, and current time being within [T3, T4] | Sending configuration b and sending configuration c |
| SSB 8 to SSB 11, and current time being within [T5, T6] | Sending configuration a and sending configuration c |
| SSB 12 to SSB 15, and current time being within [T7, T8] | Sending configuration a and sending configuration d |
| SSB 16 to SSB 19, and current time being within [T9, T10] | Sending configuration b and sending configuration d |
| ... | ... |

It can be learned from the foregoing table that, when the current time is within the third time [T1, T2], it indicates that beam switching may occur on a satellite communicating with the UE in this case, that is, switching may occur between the satellite a and the satellite b in the SSB 0 to SSB 3 in the region 1 at the current time, and the UE is triggered to send, based on each sending configuration, a sounding signal correspondingly generated based on the sending configuration, that is, determine to send the sounding signal a to the satellite a by using the sending configuration a, and send the sounding signal b to the satellite b by using the sending configuration b. A principle of sending configurations corresponding to the region 2 to the region 5 is similar to that of the region 1, and details are not described herein.

In a possible embodiment, a sounding signal may be sent based on a corresponding sending configuration in the following manner:
A sending carrier and a sending time may be determined based on the sending configuration, and the corresponding sounding signal is sent by using the sending carrier and the sending time.

Optionally, the sending configuration includes time-frequency compensation information corresponding to the satellite and movement trajectory information of the satellite. The sending carrier may be determined based on the time-frequency compensation information corresponding to the satellite, and the sending time may be determined based on the movement trajectory information of the satellite.

For example, the sending configuration a includes time-frequency compensation information corresponding to the satellite a and movement trajectory information of the satellite a. A sending carrier a may be determined based on the time-frequency compensation information corresponding to the satellite a, and a sending time a may be determined based on the movement trajectory information of the satellite a, to send the sounding signal a by using the sending carrier a and the sending time a. Similarly, the sending configuration b includes time-frequency compensation information corresponding to the satellite b and movement trajectory information of the satellite b. A sending carrier b may be determined based on the time-frequency compensation information corresponding to the satellite b, and a sending time b may be determined based on the movement trajectory information of the satellite b, to send the sounding signal b by using the sending carrier b and the sending time b.

According to this embodiment of this application, sending frequencies and sending times of the sounding signals are determined, so that the sounding signals are isolated from each other and do not interfere with each other, and each non-terrestrial device in a coverage overlapping boundary region can effectively obtain signal strength of a sounding signal sent by the terminal device.

According to this embodiment of this application, in the scenario of a progressive quasi-earth-fixed beam and a handheld terminal device, it is determined, based on the third time within which switching occurs between different non-terrestrial devices in a beam, that a current time is within the third time, and then the terminal device is triggered to send, based on each sending configuration, a sounding signal correspondingly generated based on the sending configuration. In this way, a problem that a sounding signal cannot be continuously sent based on a same sending configuration as the sounding signal sent by the terminal device reaches the non-terrestrial devices at quite different times and frequencies can be resolved, and each non-terrestrial device in a coverage overlapping boundary region can effectively obtain signal strength of a sounding signal sent by the terminal device.

### Scenario 4: earth-moving beam and directional terminal device.

In the scenario of an earth-moving beam and a directional terminal device, a coverage region of a satellite moves with movement of the satellite. A signal transmitted by the UE is clearly directional, and a signal sent by the UE by using one beam can be received by only one target satellite. Location information of an overlapping region (the region 1) between a first cell (the coverage region of the satellite a) and a second cell (the coverage cell of the satellite b) does not change over time.

For sending configurations configured by the first network device for the UE and first information sent to the UE, refer to descriptions in the foregoing scenario 1. Details are not described herein again.

Different from the foregoing scenario 1, a sounding signal sent in this embodiment of this application is directional.

Therefore, based on the sending configuration described in the foregoing scenario 1, the sending configuration further includes direction information. When a sounding signal sending mechanism is triggered, the UE sends a corresponding sounding signal to a corresponding satellite in a direction indicated by the direction information.

For example, the first sending configuration further includes first direction information, and the second sending configuration further includes second direction information. When the sounding signal sending mechanism is triggered, the UE sends the sounding signal a to the satellite a in a direction indicated by the first direction information, and sends the sounding signal b to the satellite b in a direction indicated by the second direction information.

According to this embodiment of this application, sending direction information of the sounding signal is configured in the sending configuration, so that the sounding signal sent based on the sending configuration can be clearly directional, and can be received by only one non-terrestrial device in a specific direction. In this way, an uplink time-frequency synchronization problem and a directivity problem of non-terrestrial devices associated with a plurality of sending configurations in a scenario of a directional terminal device can be resolved, and each non-terrestrial device in a coverage overlapping boundary region can effectively obtain signal strength of a sounding signal sent by the terminal device.

### Scenario 5: quasi-earth-fixed beam and directional terminal device.

In the scenario of a quasi-earth-fixed beam and a handheld terminal device, a coverage region of a satellite is fixed relative to the ground. When the satellite flies away from the coverage region, the original coverage region is taken over by another satellite as a whole, and the coverage region does not move with movement of the satellite. A signal transmitted by the UE is clearly directional, and a signal sent by the UE by using one beam can be received by only one target satellite. Location information of an overlapping region (the region 1) between a first cell (the coverage region of the satellite a) and a second cell (the coverage cell of the satellite b) changes over time.

For sending configurations configured by the first network device for the UE and first information sent to the UE, refer to descriptions in the foregoing scenario 2. Details are not described herein again.

Different from the foregoing scenario 2, a sounding signal sent in this embodiment of this application is directional.

Therefore, based on the sending configuration described in the foregoing scenario 2, the sending configuration further includes direction information. When a sounding signal sending mechanism is triggered, the UE sends a corresponding sounding signal to a corresponding satellite in a direction indicated by the direction information.

For example, the first sending configuration further includes first direction information, and the second sending configuration further includes second direction information. When the sounding signal sending mechanism is triggered, the UE sends the sounding signal a to the satellite a in a direction indicated by the first direction information, and sends the sounding signal b to the satellite b in a direction indicated by the second direction information.

According to this embodiment of this application, sending direction information of the sounding signal is configured in the sending configuration, so that the sounding signal sent based on the sending configuration can be clearly directional, and can be received by only one non-terrestrial device in a specific direction. In this way, an uplink time-frequency synchronization problem and a directivity problem of non-terrestrial devices associated with a plurality of sending configurations in a scenario of a directional terminal device can be resolved, and each non-terrestrial device in a coverage overlapping boundary region can effectively obtain signal strength of a sounding signal sent by the terminal device.

### Scenario 6: progressive quasi-earth-fixed beam and directional terminal device.

In the scenario of a progressive quasi-earth-fixed beam and a handheld terminal device, a coverage region of each beam of a satellite is fixed relative to the ground. When the satellite flies away from a coverage region, a beam that is the farthest in the original coverage region first stops coverage, and is taken over by another satellite, and then a beam that is the second farthest in the original coverage region stops coverage, and is taken over by another satellite. The coverage region is taken over between different satellites in a progressive beam-by-beam manner. The coverage region does not move with movement of the satellite. A signal transmitted by the UE is clearly directional, and a signal sent by the UE by using one beam can be received by only one target satellite. Location information of an overlapping region (the region 1) between a first cell (the coverage region of the satellite a) and a second cell (the coverage cell of the satellite b) changes over time.

For sending configurations configured by the first network device for the UE and first information sent to the UE, refer to descriptions in the foregoing scenario 3. Details are not described herein again.

Different from the foregoing scenario 3, a sounding signal sent in this embodiment of this application is directional.

Therefore, based on the sending configuration described in the foregoing scenario 3, the sending configuration further includes direction information. When a sounding signal sending mechanism is triggered, the UE sends a corresponding sounding signal to a corresponding satellite in a direction indicated by the direction information.

For example, the first sending configuration further includes first direction information, and the second sending configuration further includes second direction information. When the sounding signal sending mechanism is triggered, the UE sends the sounding signal a to the satellite a in a direction indicated by the first direction information, and sends the sounding signal b to the satellite b in a direction indicated by the second direction information.

According to this embodiment of this application, sending direction information of the sounding signal is configured in the sending configuration, so that the sounding signal sent based on the sending configuration can be clearly directional, and can be received by only one non-terrestrial device in a specific direction. In this way, an uplink time-frequency synchronization problem and a directivity problem of non-terrestrial devices associated with a plurality of sending configurations in a scenario of a directional terminal device can be resolved, and each non-terrestrial device in a coverage overlapping boundary region can effectively obtain signal strength of a sounding signal sent by the terminal device.

S403: The terminal device sends the first sounding signal to the first network device, and correspondingly, the first network device receives the first sounding signal sent by the terminal device.

When the sounding signal sending mechanism is triggered, the UE sends the first sounding signal to the first network device based on the first sending configuration. The first network device is a network device corresponding to the first cell (a cell covered by the satellite a).

It may be understood that, this step is an optional step. For a specific process of sending the first sounding signal to the first network device based on the first sending configuration, refer to the foregoing descriptions with reference to the scenarios in S401 and S402. Details are not described herein again.

S404: The terminal device sends the second sounding signal to a second network device, and correspondingly, the second network device receives the second sounding signal sent by the terminal device.

When the sounding signal sending mechanism is triggered, the UE sends the second sounding signal to the second network device based on the second sending configuration. The second network device is a network device corresponding to the second cell (a cell covered by the satellite b).

It may be understood that, this step is an optional step. For a specific process of sending the second sounding signal to the second network device based on the second sending configuration, refer to the foregoing descriptions with reference to the scenarios in S401 and S402. Details are not described herein again.

It should be noted that in all of the foregoing scenario 1 to scenario 6, the sending configurations and the first information are described based on the overlapping boundary regions existing between coverage regions of two satellites in FIG. 5.

Optionally, there may be further an overlapping boundary region existing between coverage regions of more than two satellites, for example, an overlapping boundary region existing between coverage regions of three satellites, an overlapping boundary region existing between coverage regions of four satellites, and an overlapping boundary region existing between coverage regions of N satellites.

The following describes the sending configurations and the first information based on the overlapping boundary region existing between coverage regions of more than two satellites.

For convenient and brief description, the overlapping boundary region existing between coverage regions of three satellites is used as an example for description. Principles of the overlapping boundary region existing between coverage regions of four satellites and the overlapping boundary region existing between coverage regions of N satellites are similar to that of the overlapping boundary region existing between coverage regions of three satellites. Therefore, details are not repeated.

For example, in FIG. 5, the overlapping boundary region 6 exists between the coverage region (cell a) of the satellite a, the coverage region (cell b) of the satellite b, and the coverage region (cell c) of the satellite c, and the overlapping boundary region 7 exists between the coverage region (cell a) of the satellite a, the coverage region (cell b) of the satellite b, and the coverage region of the satellite d (cell d).

For a scenario in which the UE is located in the overlapping boundary region 6, the sending configurations and the first information may be specifically described in the following aspects:
According to a first aspect, the sending configurations and the first information may be described with reference to the overlapping boundary region existing between coverage regions of two satellites.

Specifically, the overlapping boundary region existing between coverage regions of three satellites is split into overlapping boundary regions existing between coverage regions of two satellites, for example, the overlapping boundary region 1 existing between the coverage region (cell a) of the satellite a and the coverage region (cell b) of the satellite b, and the overlapping boundary region 2 existing between the coverage region (cell b) of the satellite b and the coverage region (cell c) of the satellite c.

When the UE triggers a sounding signal sending mechanism corresponding to the overlapping boundary region 1, the UE sends the first sounding signal (sounding signal a) to the satellite a by using the first sending configuration (sending configuration a), and sends the second sounding signal (sounding signal b) to the satellite b by using the second sending configuration (sending configuration b). For a specific process, refer to descriptions of the foregoing scenario 1 to scenario 6. Details are not described herein again.

Similarly, when the UE triggers a sounding signal sending mechanism corresponding to the overlapping boundary region 2, the UE sends the second sounding signal (sounding signal b) to the satellite b by using the second sending configuration (sending configuration b), and sends a third sounding signal (sounding signal c) to the satellite c by using a third sending configuration (sending configuration c).

According to a second aspect, the overlapping boundary region existing between coverage regions of three satellites is not split into overlapping boundary regions existing between coverage regions of two satellites, and a sounding signal sending mechanism corresponding to the overlapping boundary region 6 is directly determined.

Specifically, when the UE triggers the sounding signal sending mechanism corresponding to the overlapping boundary region 6, the UE sends the first sounding signal (sounding signal a) to the satellite a by using the first sending configuration (sending configuration a), sends the second sounding signal (sounding signal b) to the satellite b by using the second sending configuration (sending configuration b), and sends the third sounding signal (sounding signal c) to the satellite c by using the third sending configuration (sending configuration c). A principle of the first sending configuration, the second sending configuration, the third sending configuration, and first information in the process is similar to that of the overlapping boundary regions existing between coverage regions of two satellites. For details, refer to descriptions of the foregoing scenario 1 to scenario 6. Details are not described herein again.

In this embodiment of this application, a plurality of sending configurations are obtained, and sounding signals generated based on the sending configurations are orthogonal to each other, so that each non-terrestrial device can obtain a valid sounding signal. In this way, a problem that a sounding signal cannot be continuously sent based on a same sending configuration as the sounding signal sent by the terminal device reaches the non-terrestrial devices at quite different times and frequencies can be resolved, and each non-terrestrial device in a coverage overlapping boundary region can effectively obtain signal strength of a sounding signal sent by the terminal device.

The foregoing describes in detail the methods provided in embodiments of this application. The following provides an apparatus for implementing any method in embodiments of this application. For example, an apparatus is provided, including units (or means) configured to implement steps performed by a device in any one of the foregoing methods.

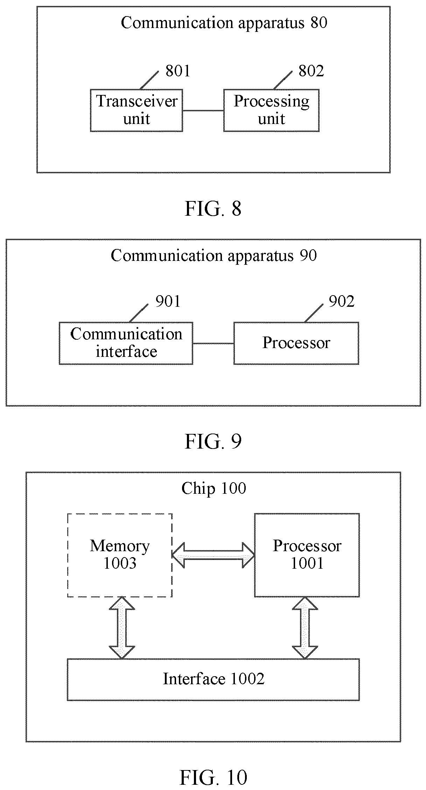

FIG. 8 is a diagram of a structure of a communication apparatus according to an embodiment of this application.

As shown in FIG. 8, the communication apparatus 80 may include a transceiver unit 801 and a processing unit 802. The transceiver unit 801 and the processing unit 802 may be software, hardware, or a combination of software and hardware.

The transceiver unit 801 may implement a sending function and/or a receiving function, and the transceiver unit 801 may also be described as a communication unit. Alternatively, the transceiver unit 801 may be a unit integrating an obtaining unit and a sending unit. The obtaining unit is configured to implement a receiving function, and the sending unit is configured to implement a sending function. Optionally, the transceiver unit 801 may be configured to receive information sent by another apparatus, and may be further configured to send information to the another apparatus.

In a possible design, the communication apparatus 80 may correspond to the terminal device in the method embodiment shown in FIG. 4. For example, the communication apparatus 80 may be the terminal device, or may be a chip in the terminal device. The communication apparatus 80 may include units configured to perform operations performed by the terminal device in the method embodiment shown in FIG. 4. In addition, the units in the communication apparatus 80 are separately configured to perform the operations performed by the terminal device in the method embodiment shown in FIG. 4. The units are described as follows:
The processing unit 802 is configured to obtain N sending configurations by using the transceiver unit 801. Any one of the N sending configurations is used to generate a sounding signal to be sent to any one of M non-terrestrial devices, N sounding signals generated based on the N sending configurations are orthogonal, an overlapping region exists between M cells corresponding to the M non-terrestrial devices, N is an integer greater than or equal to 2, and M is an integer greater than or equal to N.

The processing unit 802 is further configured to obtain first information by using the transceiver unit 801. The first information includes information about switching between the M non-terrestrial devices in the overlapping region, and the first information is used to determine to separately send the N correspondingly generated sounding signals by using the N sending configurations.

In a possible implementation, the N sending configurations include a first sending configuration and a second sending configuration, the M non-terrestrial devices include a first non-terrestrial device and a second non-terrestrial device, the first sending configuration is used to generate a first sounding signal to be sent to the first non-terrestrial device, the second sending configuration is used to generate a second sounding signal to be sent to the second non-terrestrial device, the first sounding signal and the second sounding signal are orthogonal, a first region exists between a first cell corresponding to the first non-terrestrial device and a second cell corresponding to the second non-terrestrial device, and the first region is an overlapping region between the first cell and the second cell.

The first information includes information about switching between the first non-terrestrial device and the second non-terrestrial device in the first region, and the first information is used to determine to send the first sounding signal by using the first sending configuration and send the second sounding signal by using the second sending configuration.

In a possible implementation, the first information indicates at least one of the following information: location information of the first region and time information corresponding to the first region.

In a possible implementation, the processing unit 802 is further configured to determine location information of a second region based on the location information of the first region and the time information corresponding to the first region. The second region is a region in which the first cell and the second cell overlap at a current time.

The processing unit 802 is further configured to: when the communication apparatus is located in the second region, determine to send the first sounding signal by using the first sending configuration.

In a possible implementation, the time information corresponding to the first region includes a first time corresponding to the first region, and the first region is a region in which the first cell and the second cell overlap at the first time.

The location information of the second region is determined based on the location information of the first region and a first location change amount, and the first location change amount is a location change amount of a region covered by the first non-terrestrial device from the first time to the current time.

In a possible implementation, the time information corresponding to the first region includes a second time corresponding to the first region, and the second time is a time within which switching occurs between the first non-terrestrial device and the second non-terrestrial device in the first region.

The processing unit 802 is further configured to: when a current time is within the second time, determine to send the first sounding signal by using the first sending configuration.

In a possible implementation, the first information further includes first identification information in the first region, the time information corresponding to the first region includes a third time corresponding to the first identification information, and the third time is a time within which switching occurs between the first non-terrestrial device and the second non-terrestrial device in a message coverage region.

The processing unit 802 is further configured to determine the third time based on the first identification information.

The processing unit 802 is further configured to: when a current time is within the third time, determine to send the first sounding signal by using the first sending configuration.

In a possible implementation, the processing unit 802 is further configured to determine a first sending carrier and a first sending time based on the first sending configuration.

The processing unit 802 is further configured to send the first sounding signal to a first network device based on the first sending carrier and the first sending time by using the transceiver unit. The first network device is a network device corresponding to the first cell.

In a possible implementation, the first sending configuration includes time-frequency compensation information corresponding to the first non-terrestrial device and movement trajectory information of the first non-terrestrial device.

The first sending carrier is determined based on the time-frequency compensation information corresponding to the first non-terrestrial device, and the first sending time is determined based on the movement trajectory information of the first non-terrestrial device.

In a possible implementation, the first sending configuration further includes first direction information, and the first direction information includes information about a sending direction of a message that carries the first sounding signal.

The processing unit 802 is further configured to send the first sounding signal to the first network device based on the first direction information by using the transceiver unit.

In another possible design, the communication apparatus 80 may correspond to the first network device in the method embodiment shown in FIG. 4. For example, the communication apparatus 80 may be the first network device, or may be a chip in the first network device. The communication apparatus 80 may include units configured to perform operations performed by the first network device in the method embodiment shown in FIG. 4. In addition, the units in the communication apparatus 80 are separately configured to perform the operations performed by the first network device in the method embodiment shown in FIG. 4. The units are described as follows:
The processing unit 802 is configured to send N sending configurations to a terminal device by using the transceiver unit 801. Any one of the N sending configurations is used to generate a sounding signal to be sent to any one of M non-terrestrial devices, N sounding signals generated based on the N sending configurations are orthogonal, an overlapping region exists between M cells corresponding to the M non-terrestrial devices, N is an integer greater than or equal to 2, and M is an integer greater than or equal to N.

The processing unit 802 is further configured to send first information to the terminal device by using the transceiver unit 801. The first information includes information about switching between the M non-terrestrial devices in the overlapping region, and the first information is used to determine to separately send the N correspondingly generated sounding signals by using the N sending configurations.

In a possible implementation, the N sending configurations include a first sending configuration and a second sending configuration, the M non-terrestrial devices include a first non-terrestrial device and a second non-terrestrial device, the first sending configuration is used to generate a first sounding signal to be sent to the first non-terrestrial device, the second sending configuration is used to generate a second sounding signal to be sent to the second non-terrestrial device, the first sounding signal and the second sounding signal are orthogonal, a first region exists between a first cell corresponding to the first non-terrestrial device and a second cell corresponding to the second non-terrestrial device, and the first region is an overlapping region between the first cell and the second cell.

The first information includes information about switching between the first non-terrestrial device and the second non-terrestrial device in the first region, and the first information is used to determine to send the first sounding signal by using the first sending configuration and send the second sounding signal by using the second sending configuration.

In a possible implementation, the first information indicates at least one of the following information: location information of the first region and time information corresponding to the first region.

In a possible implementation, the first information is used to: when the terminal device is located in a second region, determine to send the first sounding signal by using the first sending configuration. Location information of the second region is determined based on the location information of the first region and the time information corresponding to the first region, and the second region is a region in which the first cell and the second cell overlap at a current time.

In a possible implementation, the time information corresponding to the first region includes a first time corresponding to the first region, and the first region is a region in which the first cell and the second cell overlap at the first time.

The location information of the second region is determined based on the location information of the first region and a first location change amount, and the first location change amount is a location change amount of a region covered by the first non-terrestrial device from the first time to the current time.

In a possible implementation, the time information corresponding to the first region includes a second time corresponding to the first region, and the second time is a time within which switching occurs between the first non-terrestrial device and the second non-terrestrial device in the first region.

The first information is used to: when a current time is within the second time, determine to send the first sounding signal by using the first sending configuration.

In a possible implementation, the first information further includes first identification information in the first region, the time information corresponding to the first region includes a third time corresponding to the first identification information, and the third time is a time within which switching occurs between the first non-terrestrial device and the second non-terrestrial device in a message coverage region.

The first information is used to: when a current time is within the third time, determine to send the first sounding signal by using the first sending configuration. The third time is determined based on the first identification information.

In a possible implementation, the first sounding signal is sent based on a first sending carrier and a first sending time, and the first sending carrier and the first sending time are determined based on the first sending configuration.

In a possible implementation, the first sending configuration includes time-frequency compensation information corresponding to the first non-terrestrial device and movement trajectory information of the first non-terrestrial device.

The first sending carrier is determined based on the time-frequency compensation information corresponding to the first non-terrestrial device, and the first sending time is determined based on the movement trajectory information of the first non-terrestrial device.

In a possible implementation, the first sending configuration further includes first direction information, the first direction information includes information about a sending direction of a message that carries the first sounding signal, and the first sounding signal is sent based on the first direction information.

According to this embodiment of this application, a part or all of the units of the apparatus shown in FIG. 8 may be combined into one or more other units, or one (or more) of the units may be divided into a plurality of smaller functional units. In this way, same operations can be implemented without affecting achievement of technical effects of embodiments of this application. The foregoing units are obtained through division based on logical functions. In actual application, a function of one unit may be implemented by a plurality of units, or functions of a plurality of units may be implemented by one unit. In another embodiment of this application, the electronic device may further include another unit. In actual application, the functions may be implemented with assistance of the another unit, and may be implemented by a plurality of units in collaboration.

It should be noted that, for implementations of the units, refer to corresponding descriptions of the method embodiment shown in FIG. 4.

In the communication apparatus 80 shown in FIG. 8, a plurality of sending configurations are obtained, and sounding signals generated based on the sending configurations are orthogonal to each other, so that each non-terrestrial device can obtain a valid sounding signal. Therefore, a problem that a sounding signal cannot be continuously sent based on a same sending configuration as the sounding signal sent by the terminal device reaches the non-terrestrial devices at quite different times and frequencies can be resolved, and each non-terrestrial device in a coverage overlapping boundary region can effectively obtain signal strength of a sounding signal sent by the terminal device.

FIG. 9 is a diagram of a structure of a communication apparatus according to an embodiment of this application.

It should be understood that the communication apparatus 90 shown in FIG. 9 is merely an example. The communication apparatus in this embodiment of this application may further include another component, or include a component with a function similar to that of a component in FIG. 9, or does not necessarily need to include all components in FIG. 9.

The communication apparatus 90 includes a communication interface 901 and at least one processor 902.

The communication apparatus 90 may correspond to any network element or device of a terminal device, a first network device, or a second network device. The communication interface 901 is configured to receive and send signals, and the at least one processor 902 executes program instructions, to enable the communication apparatus 90 to implement a corresponding procedure of a method performed by a corresponding device in the foregoing method embodiment.

In a possible design, the communication apparatus 90 may correspond to the terminal device in the method embodiment shown in FIG. 4. For example, the communication apparatus 90 may be the terminal device, or may be a chip in the terminal device. The communication apparatus 90 may include components configured to perform operations performed by the terminal device in the foregoing method embodiment. In addition, the components in the communication apparatus 90 are separately configured to perform the operations performed by the terminal device in the foregoing method embodiment. Details may be as follows:
The terminal device obtains N sending configurations. Any one of the N sending configurations is used to generate a sounding signal to be sent to any one of M non-terrestrial devices, N sounding signals generated based on the N sending configurations are orthogonal, an overlapping region exists between M cells corresponding to the M non-terrestrial devices, N is an integer greater than or equal to 2, and M is an integer greater than or equal to N.

The terminal device obtains first information. The first information includes information about switching between the M non-terrestrial devices in the overlapping region, and the first information is used to determine to separately send the N correspondingly generated sounding signals by using the N sending configurations.

In a possible implementation, the N sending configurations include a first sending configuration and a second sending configuration, the M non-terrestrial devices include a first non-terrestrial device and a second non-terrestrial device, the first sending configuration is used to generate a first sounding signal to be sent to the first non-terrestrial device, the second sending configuration is used to generate a second sounding signal to be sent to the second non-terrestrial device, the first sounding signal and the second sounding signal are orthogonal, a first region exists between a first cell corresponding to the first non-terrestrial device and a second cell corresponding to the second non-terrestrial device, and the first region is an overlapping region between the first cell and the second cell.

The first information includes information about switching between the first non-terrestrial device and the second non-terrestrial device in the first region, and the first information is used to determine to send the first sounding signal by using the first sending configuration and send the second sounding signal by using the second sending configuration.

In a possible implementation, the first information indicates at least one of the following information: location information of the first region and time information corresponding to the first region.

In a possible implementation, that the first information is used to determine to send the first sounding signal by using the first sending configuration includes:
determining location information of a second region based on the location information of the first region and the time information corresponding to the first region, where the second region is a region in which the first cell and the second cell overlap at a current time; and
when the terminal device is located in the second region, determining to send the first sounding signal by using the first sending configuration.

In a possible implementation, the time information corresponding to the first region includes a first time corresponding to the first region, and the first region is a region in which the first cell and the second cell overlap at the first time.

The location information of the second region is determined based on the location information of the first region and a first location change amount, and the first location change amount is a location change amount of a region covered by the first non-terrestrial device from the first time to the current time.

In a possible implementation, the time information corresponding to the first region includes a second time corresponding to the first region, and the second time is a time within which switching occurs between the first non-terrestrial device and the second non-terrestrial device in the first region.

That the first information is used to determine to send the first sounding signal by using the first sending configuration includes:
when a current time is within the second time, determining to send the first sounding signal by using the first sending configuration.

In a possible implementation, the first information further includes first identification information in the first region, the time information corresponding to the first region includes a third time corresponding to the first identification information, and the third time is a time within which switching occurs between the first non-terrestrial device and the second non-terrestrial device in a message coverage region.

That the first information is used to determine to send the first sounding signal by using the first sending configuration includes:
determining the third time based on the first identification information; and
when a current time is within the third time, determining to send the first sounding signal by using the first sending configuration.

In a possible implementation, the sending the first sounding signal by using the first sending configuration includes:
determining a first sending carrier and a first sending time based on the first sending configuration; and
sending the first sounding signal to a first network device based on the first sending carrier and the first sending time, where the first network device is a network device corresponding to the first cell.

In a possible implementation, the first sending configuration includes time-frequency compensation information corresponding to the first non-terrestrial device and movement trajectory information of the first non-terrestrial device.

The first sending carrier is determined based on the time-frequency compensation information corresponding to the first non-terrestrial device, and the first sending time is determined based on the movement trajectory information of the first non-terrestrial device.

In a possible implementation, the first sending configuration further includes first direction information, and the first direction information includes information about a sending direction of a message that carries the first sounding signal.

The sending the first sounding signal to a first network device includes:
sending the first sounding signal to the first network device based on the first direction information.

In another possible design, the communication apparatus 90 may correspond to the first network device in the method embodiment shown in FIG. 4. For example, the communication apparatus 90 may be the first network device, or may be a chip in the first network device. The communication apparatus 90 may include components configured to perform operations performed by the first network device in the foregoing method embodiment. In addition, the components in the communication apparatus 90 are separately configured to perform the operations performed by the first network device in the foregoing method embodiment. Details may be as follows:
The first network device sends N sending configurations to a terminal device. Any one of the N sending configurations is used to generate a sounding signal to be sent to any one of M non-terrestrial devices, N sounding signals generated based on the N sending configurations are orthogonal, an overlapping region exists between M cells corresponding to the M non-terrestrial devices, N is an integer greater than or equal to 2, and M is an integer greater than or equal to N.

The first network device sends first information to the terminal device. The first information includes information about switching between the M non-terrestrial devices in the overlapping region, and the first information is used to determine to separately send the N correspondingly generated sounding signals by using the N sending configurations.

In a possible implementation, the N sending configurations include a first sending configuration and a second sending configuration, the M non-terrestrial devices include a first non-terrestrial device and a second non-terrestrial device, the first sending configuration is used to generate a first sounding signal to be sent to the first non-terrestrial device, the second sending configuration is used to generate a second sounding signal to be sent to the second non-terrestrial device, the first sounding signal and the second sounding signal are orthogonal, a first region exists between a first cell corresponding to the first non-terrestrial device and a second cell corresponding to the second non-terrestrial device, and the first region is an overlapping region between the first cell and the second cell.

The first information includes information about switching between the first non-terrestrial device and the second non-terrestrial device in the first region, and the first information is used to determine to send the first sounding signal by using the first sending configuration and send the second sounding signal by using the second sending configuration.

In a possible implementation, the first information indicates at least one of the following information: location information of the first region and time information corresponding to the first region.

In a possible implementation, that the first information is used to determine to send the first sounding signal by using the first sending configuration includes:
The first information is used to: when the terminal device is located in a second region, determine to send the first sounding signal by using the first sending configuration. Location information of the second region is determined based on the location information of the first region and the time information corresponding to the first region, and the second region is a region in which the first cell and the second cell overlap at a current time.

In a possible implementation, the time information corresponding to the first region includes a first time corresponding to the first region, and the first region is a region in which the first cell and the second cell overlap at the first time.

The location information of the second region is determined based on the location information of the first region and a first location change amount, and the first location change amount is a location change amount of a region covered by the first non-terrestrial device from the first time to the current time.

In a possible implementation, the time information corresponding to the first region includes a second time corresponding to the first region, and the second time is a time within which switching occurs between the first non-terrestrial device and the second non-terrestrial device in the first region.

That the first information is used to determine to send the first sounding signal by using the first sending configuration includes:
The first information is used to: when a current time is within the second time, determine to send the first sounding signal by using the first sending configuration.

In a possible implementation, the first information further includes first identification information in the first region, the time information corresponding to the first region includes a third time corresponding to the first identification information, and the third time is a time within which switching occurs between the first non-terrestrial device and the second non-terrestrial device in a message coverage region.

That the first information is used to determine to send the first sounding signal by using the first sending configuration includes:
The first information is used to: when a current time is within the third time, determine to send the first sounding signal by using the first sending configuration. The third time is determined based on the first identification information.

In a possible implementation, the first sounding signal is sent based on a first sending carrier and a first sending time, and the first sending carrier and the first sending time are determined based on the first sending configuration.

In a possible implementation, the first sending configuration includes time-frequency compensation information corresponding to the first non-terrestrial device and movement trajectory information of the first non-terrestrial device.

The first sending carrier is determined based on the time-frequency compensation information corresponding to the first non-terrestrial device, and the first sending time is determined based on the movement trajectory information of the first non-terrestrial device.

In a possible implementation, the first sending configuration further includes first direction information, the first direction information includes information about a sending direction of a message that carries the first sounding signal, and the first sounding signal is sent based on the first direction information.

In the communication apparatus 90 shown in FIG. 9, a plurality of sending configurations are obtained, and sounding signals generated based on the sending configurations are orthogonal to each other, so that each non-terrestrial device can obtain a valid sounding signal. In this way, a problem that a sounding signal cannot be continuously sent based on a same sending configuration as the sounding signal sent by the terminal device reaches the non-terrestrial devices at quite different times and frequencies can be resolved, and each non-terrestrial device in a coverage overlapping boundary region can effectively obtain signal strength of a sounding signal sent by the terminal device.

When the communication apparatus may be a chip or a chip system, refer to a diagram of a structure of a chip shown in FIG. 10.

As shown in FIG. 10, the chip 100 includes a processor 1001 and an interface 1002. There may be one or more processors 1001, and there may be a plurality of interfaces 1002. It should be noted that a function corresponding to each of the processor 1001 and the interface 1002 may be implemented by using a hardware design, or may be implemented by using a software design, or may be implemented by combining software and hardware. This is not limited herein.

Optionally, the chip 100 may further include a memory 1003, and the memory 1003 is configured to store necessary program instructions and data.

In this application, the processor 1001 may be configured to invoke, from the memory 1003, a program for implementing, on one or more devices or network elements of the terminal device, the first network device, and the second network device, the communication method provided in one or more embodiments of this application, and execute instructions included in the program. The interface 1002 may be configured to output an execution result of the processor 1001. In this application, the interface 1002 may be specifically configured to output messages or information of the processor 1001.

For the communication method provided in one or more embodiments of this application, refer to the foregoing embodiments shown in FIG. 4. Details are not described herein again.

The processor in this embodiment of this application may be a central processing unit (Central Processing Unit, CPU), or the processor may be another general-purpose processor, a digital signal processor (digital signal processor, DSP), an application specific-integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The memory in this embodiment of this application is configured to provide a storage space, and the storage space may store data such as an operating system and a computer program. The memory includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

According to the method provided in embodiments of this application, an embodiment of this application further provides a computer-readable storage medium. The computer-readable storage medium stores a computer program. When the computer program is run on one or more processors, the method shown in FIG. 4 may be implemented.

According to the method provided in embodiments of this application, an embodiment of this application further provides a computer program product. The computer program product includes a computer program. When the computer program is run on a processor, the method shown in FIG. 4 may be implemented.

An embodiment of this application further provides a system. The system includes at least one of the communication apparatus 80, the communication apparatus 90, or the chip 100, and is configured to perform steps performed by a corresponding device in any one of the embodiments in FIG. 4.

An embodiment of this application further provides a processing apparatus, including a processor and an interface. The processor is configured to perform the method in any one of the foregoing method embodiments.

It should be understood that the processing apparatus may be a chip. For example, the processing apparatus may be a field programmable gate array (field programmable gate array, FPGA), may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component, may be a system on chip (system on chip, SoC), may be a central processing unit (central processing unit, CPU), may be a network processor (network processor, NP), may be a digital signal processor (digital signal processor, DSP), may be a micro controller unit (micro controller unit, MCU), or may be a programmable logic device (programmable logic device, PLD) or another integrated chip. The processing apparatus may implement or execute methods, steps, and logical block diagrams disclosed in embodiments of this application. The general-purpose processor may be a microprocessor, or the processor may be any conventional processor or the like. Steps of the method disclosed with reference to embodiments of this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing methods in combination with hardware of the processor.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that, the memory in the systems and methods described in this specification aims to include but is not limited to these memories and any memory of another proper type.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, the procedure or functions according to embodiments of this application are all or partly generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid state drive (solid state drive, SSD)), or the like.

The units in the foregoing apparatus embodiments totally correspond to electronic devices in the method embodiments, and corresponding modules or units perform corresponding steps. For example, the communication unit (transceiver) performs receiving or sending steps in the method embodiments, and steps other than sending and receiving may be performed by the processing unit (processor). For a function of a specific unit, refer to a corresponding method embodiment. There may be one or more processors.

It may be understood that in embodiments of this application, an electronic device may perform a part of or all steps in embodiments of this application. These steps or operations are merely examples. In embodiments of this application, other operations or variations of the operations may be performed. In addition, the steps may be performed in a sequence different from a sequence presented in embodiments of this application, and not all the operations in embodiments of this application may be necessarily performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or a part contributing to a conventional technology, or a part of the technical solutions may be implemented in a form of a software product. The computer software product is stored in a storage medium, and includes several instructions for instructing a computer device (which may be a personal computer, a server, or a network device) to perform all or a part of steps of the methods in embodiments of this application. The storage medium includes any medium that can store program code, such as a USB flash drive, a removable hard disk drive, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, comprising:
obtaining, by a terminal device, N sending configurations, wherein any one of the N sending configurations is used to generate a sounding signal to be sent to any one of M non-terrestrial devices, N sounding signals generated based on the N sending configurations are orthogonal, an overlapping region exists between M cells corresponding to the M non-terrestrial devices, N is an integer greater than or equal to 2, and M is an integer greater than or equal to N; and
obtaining, by the terminal device, first information, wherein the first information comprises information about switching between the M non-terrestrial devices in the overlapping region, and the first information is used to determine to separately send the N correspondingly generated sounding signals by using the N sending configurations.

2. The method according to claim 1, wherein the N sending configurations comprise a first sending configuration and a second sending configuration, the M non-terrestrial devices comprise a first non-terrestrial device and a second non-terrestrial device, the first sending configuration is used to generate a first sounding signal to be sent to the first non-terrestrial device, the second sending configuration is used to generate a second sounding signal to be sent to the second non-terrestrial device, the first sounding signal and the second sounding signal are orthogonal, a first region exists between a first cell corresponding to the first non-terrestrial device and a second cell corresponding to the second non-terrestrial device, and the first region is an overlapping region between the first cell and the second cell; and
the first information comprises information about switching between the first non-terrestrial device and the second non-terrestrial device in the first region, and the first information is used to determine to send the first sounding signal by using the first sending configuration and send the second sounding signal by using the second sending configuration.

3. The method according to claim 2, wherein the first information indicates at least one of the following information: location information of the first region and time information corresponding to the first region.

4. The method according to claim 3, wherein that the first information is used to determine to send the first sounding signal by using the first sending configuration comprises:
determining location information of a second region based on the location information of the first region and the time information corresponding to the first region, wherein the second region is a region in which the first cell and the second cell overlap at a current time; and
when the terminal device is located in the second region, determining to send the first sounding signal by using the first sending configuration.

5. The method according to claim 4, wherein the time information corresponding to the first region comprises a first time corresponding to the first region, and the first region is a region in which the first cell and the second cell overlap at the first time; and
the location information of the second region is determined based on the location information of the first region and a first location change amount, and the first location change amount is a location change amount of a region covered by the first non-terrestrial device from the first time to the current time.

6. The method according to claim 3, wherein the time information corresponding to the first region comprises a second time corresponding to the first region, and the second time is a time within which switching occurs between the first non-terrestrial device and the second non-terrestrial device in the first region; and
that the first information is used to determine to send the first sounding signal by using the first sending configuration comprises:
when a current time is within the second time, determining to send the first sounding signal by using the first sending configuration.

7. The method according to claim 3, wherein the first information further comprises first identification information in the first region, the time information corresponding to the first region comprises a third time corresponding to the first identification information, and the third time is a time within which switching occurs between the first non-terrestrial device and the second non-terrestrial device in a message coverage region; and
that the first information is used to determine to send the first sounding signal by using the first sending configuration comprises:
determining the third time based on the first identification information; and
when a current time is within the third time, determining to send the first sounding signal by using the first sending configuration.

8. The method according to any one of claims 2 to 7, wherein the sending the first sounding signal by using the first sending configuration comprises:
determining a first sending carrier and a first sending time based on the first sending configuration; and
sending the first sounding signal to a first network device based on the first sending carrier and the first sending time, wherein the first network device is a network device corresponding to the first cell.

9. The method according to claim 8, wherein the first sending configuration further comprises first direction information, and the first direction information comprises information about a sending direction of a message that carries the first sounding signal; and
the sending the first sounding signal to a first network device comprises:
sending the first sounding signal to the first network device based on the first direction information.

10. A communication method, comprising:
sending, by a first network device, N sending configurations to a terminal device, wherein any one of the N sending configurations is used to generate a sounding signal to be sent to any one of M non-terrestrial devices, N sounding signals generated based on the N sending configurations are orthogonal, an overlapping region exists between M cells corresponding to the M non-terrestrial devices, N is an integer greater than or equal to 2, and M is an integer greater than or equal to N; and
sending, by the first network device, first information to the terminal device, wherein the first information comprises information about switching between the M non-terrestrial devices in the overlapping region, and the first information is used to determine to separately send the N correspondingly generated sounding signals by using the N sending configurations.

11. The method according to claim 10, wherein the N sending configurations comprise a first sending configuration and a second sending configuration, the M non-terrestrial devices comprise a first non-terrestrial device and a second non-terrestrial device, the first sending configuration is used to generate a first sounding signal to be sent to the first non-terrestrial device, the second sending configuration is used to generate a second sounding signal to be sent to the second non-terrestrial device, the first sounding signal and the second sounding signal are orthogonal, a first region exists between a first cell corresponding to the first non-terrestrial device and a second cell corresponding to the second non-terrestrial device, and the first region is an overlapping region between the first cell and the second cell; and
the first information comprises information about switching between the first non-terrestrial device and the second non-terrestrial device in the first region, and the first information is used to determine to send the first sounding signal by using the first sending configuration and send the second sounding signal by using the second sending configuration.

12. The method according to claim 11, wherein the first information indicates at least one of the following information: location information of the first region and time information corresponding to the first region.

13. The method according to claim 12, wherein that the first information is used to determine to send the first sounding signal by using the first sending configuration comprises:
the first information is used to: when the terminal device is located in a second region, determine to send the first sounding signal by using the first sending configuration, wherein location information of the second region is determined based on the location information of the first region and the time information corresponding to the first region, and the second region is a region in which the first cell and the second cell overlap at a current time.

14. The method according to claim 13, wherein the time information corresponding to the first region comprises a first time corresponding to the first region, and the first region is a region in which the first cell and the second cell overlap at the first time; and
the location information of the second region is determined based on the location information of the first region and a first location change amount, and the first location change amount is a location change amount of a region covered by the first non-terrestrial device from the first time to the current time.

15. The method according to claim 12, wherein the time information corresponding to the first region comprises a second time corresponding to the first region, and the second time is a time within which switching occurs between the first non-terrestrial device and the second non-terrestrial device in the first region; and
that the first information is used to determine to send the first sounding signal by using the first sending configuration comprises:
the first information is used to: when a current time is within the second time, determine to send the first sounding signal by using the first sending configuration.

16. The method according to claim 12, wherein the first information further comprises first identification information in the first region, the time information corresponding to the first region comprises a third time corresponding to the first identification information, and the third time is a time within which switching occurs between the first non-terrestrial device and the second non-terrestrial device in a message coverage region; and
that the first information is used to determine to send the first sounding signal by using the first sending configuration comprises:
the first information is used to: when a current time is within the third time, determine to send the first sounding signal by using the first sending configuration, wherein the third time is determined based on the first identification information.

17. The method according to any one of claims 11 to 16, wherein the first sounding signal is sent based on a first sending carrier and a first sending time, and the first sending carrier and the first sending time are determined based on the first sending configuration.

18. The method according to claim 17, wherein the first sending configuration further comprises first direction information, the first direction information comprises information about a sending direction of a message that carries the first sounding signal, and the first sounding signal is sent based on the first direction information.

19. A communication apparatus, comprising:
a processing unit, configured to obtain N sending configurations by using a transceiver unit, wherein any one of the N sending configurations is used to generate a sounding signal to be sent to any one of M non-terrestrial devices, N sounding signals generated based on the N sending configurations are orthogonal, an overlapping region exists between M cells corresponding to the M non-terrestrial devices, N is an integer greater than or equal to 2, and M is an integer greater than or equal to N; and
the processing unit is further configured to obtain first information by using the transceiver unit, wherein the first information comprises information about switching between the M non-terrestrial devices in the overlapping region, and the first information is used to determine to separately send the N correspondingly generated sounding signals by using the N sending configurations.

20. The apparatus according to claim 19, wherein the N sending configurations comprise a first sending configuration and a second sending configuration, the M non-terrestrial devices comprise a first non-terrestrial device and a second non-terrestrial device, the first sending configuration is used to generate a first sounding signal to be sent to the first non-terrestrial device, the second sending configuration is used to generate a second sounding signal to be sent to the second non-terrestrial device, the first sounding signal and the second sounding signal are orthogonal, a first region exists between a first cell corresponding to the first non-terrestrial device and a second cell corresponding to the second non-terrestrial device, and the first region is an overlapping region between the first cell and the second cell; and
the first information comprises information about switching between the first non-terrestrial device and the second non-terrestrial device in the first region, and the first information is used to determine to send the first sounding signal by using the first sending configuration and send the second sounding signal by using the second sending configuration.

21. The apparatus according to claim 20, wherein the first information indicates at least one of the following information: location information of the first region and time information corresponding to the first region.

22. The apparatus according to claim 21, wherein the processing unit is further configured to determine location information of a second region based on the location information of the first region and the time information corresponding to the first region, wherein the second region is a region in which the first cell and the second cell overlap at a current time; and
the processing unit is further configured to: when the communication apparatus is located in the second region, determine to send the first sounding signal by using the first sending configuration.

23. The apparatus according to claim 22, wherein the time information corresponding to the first region comprises a first time corresponding to the first region, and the first region is a region in which the first cell and the second cell overlap at the first time; and
the location information of the second region is determined based on the location information of the first region and a first location change amount, and the first location change amount is a location change amount of a region covered by the first non-terrestrial device from the first time to the current time.

24. The apparatus according to claim 21, wherein the time information corresponding to the first region comprises a second time corresponding to the first region, and the second time is a time within which switching occurs between the first non-terrestrial device and the second non-terrestrial device in the first region; and
the processing unit is further configured to: when a current time is within the second time, determine to send the first sounding signal by using the first sending configuration.

25. The apparatus according to claim 21, wherein the first information further comprises first identification information in the first region, the time information corresponding to the first region comprises a third time corresponding to the first identification information, and the third time is a time within which switching occurs between the first non-terrestrial device and the second non-terrestrial device in a message coverage region;
the processing unit is further configured to determine the third time based on the first identification information; and
the processing unit is further configured to: when a current time is within the third time, determine to send the first sounding signal by using the first sending configuration.

26. The apparatus according to any one of claims 20 to 25, wherein the processing unit is further configured to determine a first sending carrier and a first sending time based on the first sending configuration; and
the processing unit is further configured to send the first sounding signal to a first network device based on the first sending carrier and the first sending time by using the transceiver unit, wherein the first network device is a network device corresponding to the first cell.

27. The apparatus according to claim 26, wherein the first sending configuration further comprises first direction information, and the first direction information comprises information about a sending direction of a message that carries the first sounding signal; and
the processing unit is further configured to send the first sounding signal to the first network device based on the first direction information by using the transceiver unit.

28. A communication apparatus, comprising:
a processing unit, configured to send N sending configurations to a terminal device by using a transceiver unit, wherein any one of the N sending configurations is used to generate a sounding signal to be sent to any one of M non-terrestrial devices, N sounding signals generated based on the N sending configurations are orthogonal, an overlapping region exists between M cells corresponding to the M non-terrestrial devices, N is an integer greater than or equal to 2, and M is an integer greater than or equal to N; and
the processing unit is further configured to send first information to the terminal device by using the transceiver unit, wherein the first information comprises information about switching between the M non-terrestrial devices in the overlapping region, and the first information is used to determine to separately send the N correspondingly generated sounding signals by using the N sending configurations.

29. The apparatus according to claim 28, wherein the N sending configurations comprise a first sending configuration and a second sending configuration, the M non-terrestrial devices comprise a first non-terrestrial device and a second non-terrestrial device, the first sending configuration is used to generate a first sounding signal to be sent to the first non-terrestrial device, the second sending configuration is used to generate a second sounding signal to be sent to the second non-terrestrial device, the first sounding signal and the second sounding signal are orthogonal, a first region exists between a first cell corresponding to the first non-terrestrial device and a second cell corresponding to the second non-terrestrial device, and the first region is an overlapping region between the first cell and the second cell; and
the first information comprises information about switching between the first non-terrestrial device and the second non-terrestrial device in the first region, and the first information is used to determine to send the first sounding signal by using the first sending configuration and send the second sounding signal by using the second sending configuration.

30. The apparatus according to claim 29, wherein the first information indicates at least one of the following information: location information of the first region and time information corresponding to the first region.

31. The apparatus according to claim 30, wherein the first information is used to: when the terminal device is located in a second region, determine to send the first sounding signal by using the first sending configuration, wherein location information of the second region is determined based on the location information of the first region and the time information corresponding to the first region, and the second region is a region in which the first cell and the second cell overlap at a current time.

32. The apparatus according to claim 31, wherein the time information corresponding to the first region comprises a first time corresponding to the first region, and the first region is a region in which the first cell and the second cell overlap at the first time; and
the location information of the second region is determined based on the location information of the first region and a first location change amount, and the first location change amount is a location change amount of a region covered by the first non-terrestrial device from the first time to the current time.

33. The apparatus according to claim 30, wherein the time information corresponding to the first region comprises a second time corresponding to the first region, and the second time is a time within which switching occurs between the first non-terrestrial device and the second non-terrestrial device in the first region; and
the first information is used to: when a current time is within the second time, determine to send the first sounding signal by using the first sending configuration.

34. The apparatus according to claim 30, wherein the first information further comprises first identification information in the first region, the time information corresponding to the first region comprises a third time corresponding to the first identification information, and the third time is a time within which switching occurs between the first non-terrestrial device and the second non-terrestrial device in a message coverage region; and
the first information is used to: when a current time is within the third time, determine to send the first sounding signal by using the first sending configuration, wherein the third time is determined based on the first identification information.

35. The apparatus according to any one of claims 29 to 34, wherein the first sounding signal is sent based on a first sending carrier and a first sending time, and the first sending carrier and the first sending time are determined based on the first sending configuration.

36. The apparatus according to claim 35, wherein the first sending configuration further comprises first direction information, the first direction information comprises information about a sending direction of a message that carries the first sounding signal, and the first sounding signal is sent based on the first direction information.

37. A communication apparatus, comprising: a processor, wherein
when the processor invokes a computer program or instructions in a memory, the method according to any one of claims 1 to 9 or the method according to any one of claims 10 to 18 is performed.

38. A communication apparatus, comprising a logic circuit and a communication interface, wherein
the communication interface is configured to receive information or send information; and
the logic circuit is configured to receive the information or send the information through the communication interface, so that the method according to any one of claims 1 to 9 or the method according to any one of claims 10 to 18 is performed.

39. A computer-readable storage medium, wherein
the computer-readable storage medium is configured to store instructions or a computer program; and when the instructions or the computer program is executed, the method according to any one of claims 1 to 9 or the method according to any one of claims 10 to 18 is implemented.

40. A computer program product, comprising instructions or a computer program, wherein
when the instructions or the computer program is executed, the method according to any one of claims 1 to 9 or the method according to any one of claims 10 to 18 is implemented.
